# EUROPEAN PATENT SPECIFICATION

(11) **EP 0 944 266 B1**
(45) Date of publication and mention of the grant of the patent: **26.08.2009**
(21) Application number: 99104301.9
(22) Date of filing: 03.03.1999
(51) Int. Cl.: H04N 7/50, H04N 7/36

(54) **Fast video encoding method with low power consumption**
Schnelles Videokodierungsverfahren mit geringem Energieverbrauch
Procédé de codage vidéo rapide et à faible consommation d'énergie

(30) Priority: 03.03.1998 US 76685 P; 04.03.1998 US 76795 P
(43) Date of publication of application: 22.09.1999
(73) Proprietor: IMEC, 3001 Leuven (BE)
(72) Inventor: Brockmeyer, Eric, 3001 Heverlee (BE); Catthoor, Francky, 9140 Temse (BE)
(74) Representative: Bird, William Edward

(56) References cited:
- EP-A- 0 698 861
- EP-A- 0 848 558
- DE GREEF E ET AL: "Mapping real-time motion estimation type algorithms to memory efficient, programmable multi-processor architectures" MICROPROCESSING AND MICROPROGRAMMING,NL,ELSEVIER SCIENCE PUBLISHERS, BV., AMSTERDAM, vol. 41, no. 5, 1 October 1995 (1995-10-01), pages 409-423, XP004002606 ISSN: 0165-6074
- DIGUET J P ET AL: "Formalized methodology for data reuse exploration in hierarchical memory mappings" PROCEEDINGS 1997 INTERNATIONAL SYMPOSIUM ON LOW POWER ELECTRONICS AND DESIGN (IEEE CAT. NO.97TH8332), PROCEEDINGS OF 1997 INTERNATIONAL SYMPOSIUM ON LOW POWER ELECTRONICS AND DESIGN, MONTEREY, CA, USA, 18-20 AUG. 1997, pages 30-35, XP002168959 1997, New York, NY, USA, ACM, USA ISBN: 0-89791-903-3

## Description

### FIELD OF THE INVENTION

The invention relates to video encoding methods with variable video frames.

### BACKGROUND OF THE INVENTION

A video information stream comprises of a time sequence of video frames. Said time sequence of video frames can be recorded for instance by a video camera/recorder. Each of said video frames can be considered as a still image. Said video frames are represented in a digital system as an array of pixels. Said pixels comprises luminance or light intensity and chrominance or color information. Said information is stored in a memory of said digital system. For each pixel some bits are reserved. From a programming point of view each video frame can be considered as a two-dimensional data type, although said video frames are not necessary rectangular. Note that fields from an interlaced video time sequence can also be considered as video frames.

A particular aspect of the considered video frames is that they are variable in size and even location with respect to a fixed reference such as e.g. the display. Moreover the considered video frames support the object concept by indicating whether a pixel belongs to an object or not.

In principle when said video information stream must be transmitted between two digital systems, this can be realised by sending the video frames sequentially in time, for instance by sending the pixels of said video frame s and thus the bits representing said pixels sequentially in time.

There exist however more elaborated transmission schemes enabling faster and more reliable communication between two digital systems. Said transmission schemes are based on encoding said video information stream in the transmitting digital system and decoding the encoded video information stream in the receiving digital system. Note that the same principles can be exploited for storage purposes.

During encoding the original video information stream is transformed into another digital representation. Said digital representation is then transmitted. While decoding the original video information stream is reconstructed from said digital representation.

The MPEG-4 standard defines such a for transmission (and storage) efficient encoded digital representation of a video information stream.

Encoding requires operations on the video information stream. Said operations are performed on a digital system (for instance in said transmitting digital system). Each operation performed by a digital system consumes power. The way in which said operations for encoding are performed is called a method. Said methods have some characteristics such as encoding speed and the overall power consumption needed for encoding.

Said digital system can either be application-specific hardware or a programmable processor architecture. It is well-known that most power consumption in said digital systems, while performing real-time multi-dimensional signal processing such as video stream encoding on said digital systems, is due to the memory units in said digital systems and the communication path between said memory units. More precisely individual read and write operations from and to memory units by processors and/or datapaths and between memories become more power expensive when said memory units are larger, and so does the access time or latency from the busses. Naturally also the amount of read and write operations are determining the overall power consumption and the bus loading. The larger the communication path the larger is also the power consumption for a data transfer operation. With communication is meant here the communication between memory units and the processors and data paths found in said digital system and between memories themselves. There is also a difference between on- and off-chip memories. Note that the same considerations are valid when considering speed as a performance criterion.

As the power consumption of said digital system is dominated by read and write operations, thus manipulations on data types, such as video frames, said methods are considered to be data-dominated.

As the algorithm specification, the algorithm choice and its implementation determine the amount of operations and the required memory sizes it is clear that these have a big impact on the overall power consumption and other performance criteria such as speed and bus loading.

A method for encoding a video information stream, resulting in a minimal power consumption of the digital system on which the method is implemented, and exhibiting excellent performance, e.g. being fast, must be based on optimized data storage, related to memory sizes, and data transfer, related to the amount of read and write operations. Such a method can be developed by transforming an initial less power optimal method by using various code manipulations. Such a transformation approach must be supported by an adequate exploration methodology.

In general a method can be described as an ordered set of operations which are repetitively executed. Said repetition is organized in a loop. During execution data is consumed and produced. Said code manipulations can be loop- and/or data-flow transformations. Said transformations change the ordering of the operations in the loop and result in another data consumption-production ordering. Also data reuse concepts can be used in order to obtain a more power consumption and speed optimal method. Data reuse deals with specifying from and to which memory data is read and written. More in particular applying the data reuse concept means making copies of data to smaller memories and to let said data be accessed by the processors and/or datapaths from said smaller memories.

Naturally when such a power consumption and speed optimal encoding method exist it can be implemented on a digital system, adapted for said method. This adaptation can be done by an efficient programming of programmable (application specific) processor architectures or by actually designing an application-specific or domain-specific processor with the appropriate memory units.

The fact that the power consumption is heavily dominated by data storage and data transfer of multi-dimensional data types is demonstrated in the publication [F.Catthoor, F.Franssen, S.Wuytack, L.Nachtergaele, H.De Man, "Global communication and memory optimizing transformations for low power signal processing systems", IEEE workshop on VLSI signal processing, La Jolla CA,Oct. 1994] and [R.Gonzales, M.Horowitz, "Energy dissipation in general-purpose microprocessors", IEEE J. Solid-state Circ., Vol.SC-31, No.9, pp.1277-1283, Sep.1996] for custom hardware and programmable processors respectively.

Power consumption in deep submicron CMOS digital devices is dominated by the charging of wires on-chip and off-chip. The technological evolution aims at minimizing the power consumption by lowering the supply voltages, using short thin wires and small devices, using reduced logic swing. These non-application specific approaches do not exploit the characteristics of the application in the design of the digital system and/or implementation on a given digital system.

Some following general principles for power consumption reduction are known: match architecture and computation, preserve locality and regularity inherent in the application, exploit signal statistics and data correlations and deliver energy and performance on demand. These guidelines must however be translated and extended for a more memory related context as found in multi-media applications.

The data storage and transfer exploration methodology, applied for constructing the encoding methods presented in the invention, is discussed in the

### detailed description of the invention.

The different aspects of the invention will be illustrated for encoding following the MPEG-4 standard, discussed in the detailed description of the invention. The current realizations of MPEG based video coding multi-media applications can be distinguished in two main classes: the customized architectures and the programmable architectures. The disadvantages of the customized approach [P. Pirsch, N. Demassieux, W. Gehrke, "VLSI architectures for video compression - a survey", Proc. of the IEEE, invited paper, Vol. 83, No. 2, pp. 220-246, Feb. 1995] is that the design is difficult as only limited design exploration support is available, application-specific, still has large power consumption, due to rigid memory hierarchy and central bus architecture. Many programmable processor solutions, for video and image processing, have been proposed, also in the context of MPEG [K. Roenner, J. Kneip, " Architecture and applications of the HiPar video signal processor", IEEE Trans. on Circuit and Systems for Video Technology, special issue on "VLSI for video signal processors".]. Power consumption management and reduction for such processors is however hardly tackled. The disadvantages of the implementation on a programmable processor are indeed (1) the large power consumption, due to expensive data transfers of which many are not really necessary, (2) most area of chip/board is taken up by memories and busses, (3) addressing and control complexity are high and (4) the speed is too low such that parallel processing is necessary, which are difficult to program efficiently due to data communication.

Much work has been published in the past on cache coherence protocols, for parallel processors. These approaches are mostly based on load balancing and parallelisation issues for arithmetic operations. Although some work on data localisation issues in order to obtain better cache usage exist, it is clear that a more data transfer and storage oriented solution is required for data-dominated applications such as multi-media applications. Data reuse is the basis for traditional caching policies. These policies are however not sufficiently application oriented, and thus not exploiting enough the particular algorithm which must be implemented, and not based on global optimization considerations.

The use of global and agressive system-level data-flow and loop transformations is illustrated for a customized video compression architure for the H.263 video conferencing decoder standard in [L.Nachtergaele, F.Catthoor, B.Kapoor, D.Moolenaar, S.Janssens, "Low power storage exploration for H.263 video decoder", IEEE workshop on VLSI signal processing, Monterey CA, Oct. 1996] and other realistic multi-media kernels in [F.Catthoor, S.Wuytack, E.De Greef, F.Franssen, L.Nachtergaele. H.De Man, "System-level transformations for low power data transfer and storage", in paper collection on "Low power CMOS design" (eds. A.Chandrakasan, R.Brodersen), IEEE Press, pp.609-618, 1998] [S.Wuytack, F.Catthoor, L.Nachtergaele, H.De Man, power Exploration for Data Dominated Video Applications", Proc. IEEE Intnl. Symp. on Low Power Design, Monterey, pp.359-364, Aug. 1996].

### AIM OF THE INVENTION

The invention presents video information stream encoding methods, found with application of data storage and transfer design methodology for data-dominated applications.

The invention relates to video encoding methods with variable video frames designed such that the digital system on which said methods are implemented, consumes a minimal of power, during execution of said methods and still excellent performance such as speed compliance is obtained.

The resulting video information stream encoding methods can be mapped on different processor architectures and custom hardware. Said methods enable combined low power consumption, reduced bus loading and increased performance to achieve speed compliance.

### SUMMARY OF THE INVENTION

Methods for encoding a video information stream are disclosed. A video information stream comprises of a time ordered time sequence of video frames. Each of said video frames can be considered as a still image. Said video frames are represented as an array of pixels. The video frames of a video information stream can have different sizes and locations with respect to a fixed reference. Besides light intensitity and color for each pixel position additional information can be stored. For instance it can be specified to which object a pixel belong or possible whether the pixel is not belonging to an object. Pixels not belonging to an object are denoted transparant pixels.

Encoding of the video information stream is done for obtaining another digital representation of said video information stream. Said digital representation being more efficient for transmission or storage. Said encoding is based on the fact that temporal nearby video frames are often quite similar except for some motion. The arrays of pixels of temporal nearby video frames often contain the same luminance and chrominance information except that the coordinate places or pixel positions of said information in said arrays are shifted some locations. Shifting in place as function of time defines a motion. Said motion is characterized by a motion vector.

Encoding of the video information stream is done by performing encoding of said video frames of said time sequence with respect to other video frames of said time sequence. Said other video frames are denoted reference video frames. Any video frame may be a reference frame. For the presented encoding methods it is important to denote how both the video frames to be encoded and the reference video frames are located in time with respect to each order. As such a time ordering of said video frames is explicitly stated in said methods. A video frame situated in time before the video frame under consideration is denoted a previous video frame. A video frame situating in time after the video frame under consideration is denoted a next video frame. The video frame under consideration can be denoted current video frame.

Said encoding is in principal based on motion estimation of said motion between a video frame and a reference video frame. Said motion estimation defines a motion vector. Motion estimation is based on calculating a norm of the difference between parts of two video frames. Such a norm is a measure of the difference between parts of two video frames. Often the sum of absolute differences is used as norm. Other norms can also be used. The norm can also be denoted as a mathematical norm, being an operator on two object, here video frames, measuring the differences between said objects. At least the norm is minimal when said difference is zero, thus when said objects are the same. When the motion is estimated, a motion compensation is performed. Said motion compensation comprising of constructing a new motion compensated video frame from the reference video frame by applying the found motion. Said motion compensated video frame comprises of the pixels of said reference video frame but located at different coordinate places. Said motion compensated video frame can then be substracted from the video frame under consideration. This results in an error video frame. Due to the temporal relation between the video frames said error video frame will contain less information. This error video frame and the motion estimation vectors are then transmitted, optionally after some additional coding. The substraction and additional coding is further denoted coding. Also padding can be included in said coding.

Said encoding will be limited to a part of a video frame. Said encoding is also not performed on the video frame as a whole but on blocks of said video frame. Said video frame is divided in non-overlapping or overlapping blocks. Said blocks are thus arrays of pixels but of smaller size tham the video frame array. Blocks can be considered as array of pixels being different to each other by the fact that they are at least partly spacely divided. Note that different video frame can be characterized as arrays of pixels being spaced in time. Said encoding operations are then performed on all the blocks of said video frame. As the encoding of a video frame is performed with respect to a reference video frame, implicitly a relation is defined between the blocks of the video frames under consideration and the blocks of the reference video frame. Indeed the calculation of the sum of absolute differences or any other norm will only be performed for a block of a video frame and blocks of the reference video frame which are nearby located. These locations are defined by the maximum length of the motion estimation vector. These locations define a search-area. Blocks of video frames to be encoded are called related when they refer to the same block in the reference video frame. One can also define these blocks as related because they will exploit the same search area in the reference video frame. In the reference video frame also a so-called related block is defined. Said related block is the block in the reference video frame used for calculation of a particular norm for a block of the video frame under consideration.

In the application encoding of a video frame with respect to one reference video frame, encoding of a video frame with respect to two reference video frames, encoding of a time sequence of video frames with respect to two reference video frames and methods for motion estimation are presented. Said encoding and motion estimation methods are designed such that when implemented on a digital system, the power consumption of said digital system while executing said methods, is minimal. Said encoding and motion estimation methods also exhibit excellent performance with respect to other performance criteria such as speed.

The presented methods comprises of operations on data. Said operations can be reading from and writing to a memory. Said operations can also be aritmetic operations.

The different aspects of the invention are stated below. These aspects can be used independently or combined.

A first aspect of the invention is a method for encoding of at least a part of a video frame with respect to a reference video frame by dividing the video frame under consideration into blocks and performing the basic encoding operations such as motion estimation, motion compensation and block coding (including padding), in the order described above on a block of the considered video frame before considering another block of the considered video frame.

A second aspect of the invention is a method for encoding of at least a part of a video frame with respect to two reference video frames. A time ordering between the video frames to be encoded and the reference video frames is introduced. The encoding method also uses a block based implementation as described above. The application of the basic encoding operations such as motion estimation, compensation and block coding are performed in a particular order.

A third aspect of the invention is the introduction of several methods for encoding of a time sequence of video frames with respect to two reference video frames. As such a merging of the encoding of said video frames is realized. A time ordering between the video frames to be encoded and the reference video frames is introduced. The encoding methods also use a block based implementation as described above. The application of the basic encoding operations such as motion estimation, compensation and block coding are performed in a particular order. The choice between the proposed methods can be done at run-time.

A fourth aspect of the invention is the introduction of a particular implementation of the above defined methods for encoding of a time sequence of video frames with respect to two reference video frames. In said implementation it is specified that the further encoding of blocks is started as soon as this is technically possible. Said implementation is denoted a chasing mode implementation.

A fifth aspect of the invention is the introduction of the concept of a group video frame or video frame group for encoding of a time sequence of video frames. The group video frame contains the video frames of the time sequence for which the encoding is merged. The group video frame is divided in cells. The encoding of blocks of the original video frames is merged when the blocks belong to the same cell of the group video frame.

A sixth aspect of the invention is a method for encoding a time sequence of video frames exploiting the group video frame concept thereby performing the motion estimation such that a pixel is reused for all motion estimations in which it is needed. In this method a check is performed to determine whether a pixel is needed for any of the motion estimations. When it is needed, it is read and used for all motion estimations in which it is needed.

A seventh aspect of the invention is a method for determining a motion estimation vector for a block with respect to a reference video frame based on norm calculations, wherein calculation of this norm is excluded when part of the related block in the reference video frame falls out of the reference video frame.

An eighth aspect of the invention are methods for determining a motion estimation vector for a block with respect to a reference video frame based on norm calculations wherein calculation of the norm is excluded when part of the related block in the reference video frame contains transparant pixels.

A ninth aspect of the invention is a method for determining a motion estimation vector for a block with respect to a reference video frame based on an interpolated version of that reference video frame. The interpolated version of the reference video frame is not determined in advance but the interpolated pixels are calculated when needed and not stored.

A tenth aspect of the invention are methods for determining a motion estimation vector for a block with respect to a reference video frame wherein a memory hierarchy is exploited.

### BRIEF DESCRIPTION OF FIGURES AND DRAWINGS

Fig. 1 MPEG-4 Video Object Plane time time sequence, comprising of the previous VOP, the next VOP, intermediate or bi-directional VOPs, said VOPs comprising of non-overlapping MacroBlocks, said arrows indicating to which reference VOP the motion of a block of these VOPs will be performed, said blocks can be denoted transparent, boundary or opaque, depending on their location with respect to the object (e.g., the tree) in a VOP.
Fig. 2 Original (VOP-oriented) MPEG-4 like source code, showing the various operations (full-pel motion estimation, half-pel motion estimation, motion compensation, coding of error blocks) and the order in which the operations are performed.
Fig. 3 Invented (MB-oriented) MPEG-4 like source code, showing the various operations and the order in which the operations are performed. Various operations are now located in the same loop, resulting in a block-oriented approach.
Fig. 4 Original MPEG-4 like source code for B-VOP encoding in interpolated mode, showing the various operations and the operation order.
Fig. 5 Invented MPEG-4 like code for B-VOP encoding in interpolated mode, showing the various operations and the operation order.
Fig. 6 Illustration of the principle of block division. A video frame can be represented as an array of pixels. A block can then be represented as a subarray of said pixels, with smaller sizes. Motion estimation of a block of a video frame is performed with respect to a reference video frame.
Fig. 7 Flowchart of block based encoding of a video frame with respect to a reference video frame. Left: Original (VOP-oriented) MPEG-4 like source code. Right: Invented (Block-oriented) source code.
Fig. 8 Motion estimations of blocks of a video frame are performed with respect to two reference video frames, one located before said video frame, one located after said video frame.
Fig. 9 Flowchart of block based encoding of a video frame with respect to two reference video frames as described by Fig. 5.
Fig. 10 Motion estimations of blocks of a time sequence of video frame are performed with respect to two reference video frames, one located before said video frame, one located after said video frame. The blocks of the video frames in between the reference frames and the blocks of the next reference video frame can be grouped in a set or group when they relate to the same block of the previous reference frame.
Fig. 11 Flowchart of block based encoding of a time sequence of video frames in which a merging of the operations on the blocks of the intermediate frames is performed.
Fig. 12 Flowchart of block based encoding of a time sequence of video frames in which a merging of the operations on the blocks of both the intermediate and the next reference frame is performed.
Fig. 13 Method for grouping blocks for combined encoding. A group video frame is defined. Said group video comprises of cells. Blocks of video frames which reference position fall in the same cell are merged.
Fig. 14 Two grouped blocks of a video frame are shown with their corresponding search-area. It is shown that the bounding box of these two search-areas contains pixels which are not needed. Therefore it is relevant to included in the source code a pixel selection step.
Fig. 15 Flowchart of motion estimation source code implementing a pixel selection step, based on the principle of Fig. 14. Note that when a pixel is read, it is used for motion estimations of all the blocks which need that pixel.
Fig. 16 Flowchart of motion estimation source code implementing a pixel selection step, excluding pixels lying out of the reference frame. Note that when a pixel is read, it is used for motion estimations of all the blocks which need that pixel.
Fig. 17 Flowchart of motion estimation source code implementing a pixel selection step, excluding tranparent pixels. Note that when a pixel is read, it is used for motion estimations of all the blocks which need that pixel.
Fig. 18 Method for encoding based on an interpolated reference video frame. The black bullets are the original pixels of the reference video frame while the white bullets are the pixels determining by interpolating the spacial neighboring pixels.
Fig. 19 Flowchart of motion estimation source code based on an interpolated reference video frame implementing recalculation of the interpolated pixels.
Fig. 20 Flowchart of Fig. 19, implementing a pixel selection step excluding pixels lying out of the reference frame.
Fig. 21 Flowchart of Fig. 19, implementing a pixel selection step excluding pixels which are transparent.
Fig. 22 Principle of exploiting a memory hierarchy. A set of memories (110, 120, 130, 140) are exploited. The determination of norms goes on in the processor (150). The memories are fed from the main memory via (100). The first memory relates to the search-area band, the second memory relates to the search-area, the third memory relates to the block-band and the fourth memory relates to the block itself.

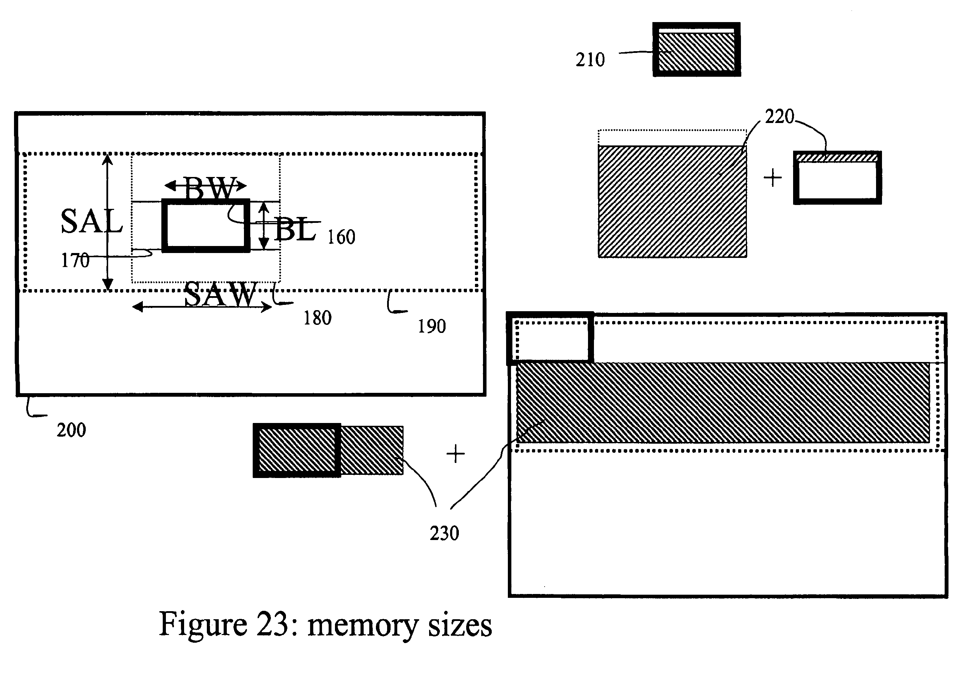

Fig. 23 Illustration of lower bounds on the memories of the memory hierarchy. The size of the block memory is lower bounded by a memory size which can contains the pixels of an block indicated by (210). The size of the block band memory is lower bounded by a memory size which can contains the pixels of an block indicated by (220). The size of the search-area band memory is lower bounded by a memory size which can contains the pixels of an block indicated by (230).
Fig. 24 Illustration of 3 situations, depicting when interpolated pixels (open circles) of the reference video frame, comprising of both interpolated pixels and original pixels (closed circles) are exploited, more in particular when the pixels of the video frame under consideration (closed squares) overlap these interpolated pixels.

### DETAILED DESCRIPTION OF THE INVENTION

The invention presents video encoding methods resulting after application of a system level design methodology for data-dominated applications. Said methodology exploits innovative code manipulations such as data-flow and loop transformations, and data reuse concepts and is intrinsically based on data transfer and storage issues. The resulting encoding methods can be mapped on different processor architectures such as application-specific or programmable processors and custom hardware. When implemented on a digital system, said methods result in a low power consumption of said digital system, while executing said method. Moreover said methods show excellent speed characteristics.

The aspects of the invention are illustrated for encoding following the MPEG-4 standard. Although the aspects of the invention and the detailed description is given in terms of MPEG-4 terminology the resulting video encoding principles are relevant for any MPEG-4 like type of encoding or any type of encoding exploiting a translational motion model for encoding.

First the MPEG-4 standard is discussed. Source code, representing a straightforward implementation of the standard is presented and further referred to as the original source code. Second some elements of the overall data storage and transfer exploration methodology are presented. Third details about the invented video encoding methods found while applying this methodology to the so-called MPEG-4 original source code are presented.

### MPEG-4 standard

The MPEG-4 standard enables a coded digital representation of video data for efficient transmission or storage [T. Sikora, the MPEG-4 video standard verification model, in IEEE transactions on circuits and systems for video technology, Vol. 7, No. 1, pp. 19-31, Feb. 1997].

The initial video information stream is represented by a time sequence of Video Object Planes, denoted VOPs. Each Video Object Plane represents a frozed image. Said Video Object Plane comprises of an array of pixels. Said pixels may comprise luminance, chrominance and shape information.

The VOPs are divided in MacroBlocks, denoted MBs. The encoding principle is based on the temporal redundancy existing when considering Video Object Planes, which are located nearby in time. One can consider a second Video Object Plane, situated in the video information stream shortly after a first Video Object Plane, as a by movement distorted version of the first Video Object Plane plus some minor changes. The movement distorsion can be seen as the movement of the MacroBlocks of said first Video Object Plane. The motion of a MacroBlock is represented by a motion vector.

The VOPs can be classified as I-VOP or Intra-VOP, P-VOP or Predicted-VOP and B-VOP or Bi-directional predicted VOP.

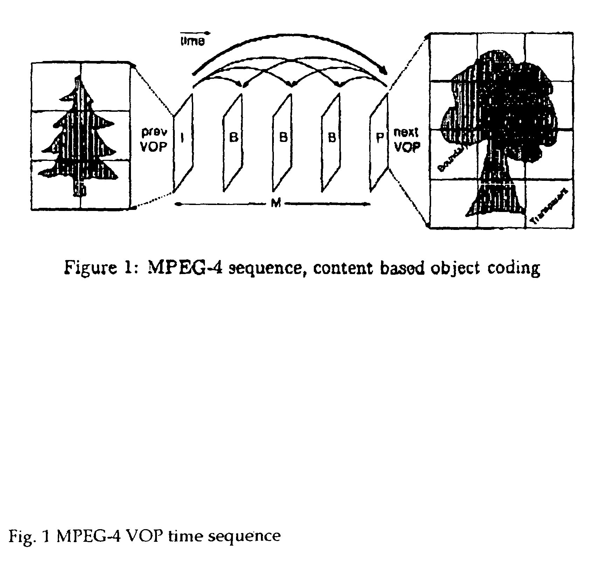

The basic principle of encoding for P-VOPs goes as follows (Fig. 1, Fig. 2, Fig. 7): given the previous VOP and the next VOP, the motion of the next VOP relative to the previous VOP is estimated, then the next VOP is reconstructed based on the previous VOP by incorporating the motion. This constructed VOP is subtracted by the look-alike real next VOP. The resulting error VOP can be encoded by less bits and is used for transmission and/or storage. I-VOPs are used as initialization of the above procedure and send once a while for re-initialization purposes. The above described procedure is not performed for the whole VOP but for the MacroBlocks of said VOPs.

Full search also called full-pel motion estimation estimates the motion between two VOPs of the time sequence. As the VOPs are divided in MBs the motion estimation is performed sequentially for each MB. Only when essentially forall MB of the VOP motion estimation is performed, motion compensation and coding is performed.

Full-pel motion estimation of a MB is based on the calculation of the sum of absolute differences, denoted SADs, between a MB of the next VOP in the previous VOP at every possible position of the motion vector, denoted MV, with a certain maximum MV length, defining the size of the search-area.

When SAD of the full-pel motion estimation is below a predetermined value the motion estimation is improved by a half-pel motion estimation. When the SAD of the full-pell full search motion estimation is above said predetermined value, the MB is intra-coded. With intra-coding is it meant that the MB is coded and transmitted without exploiting the temporal redundancy.

The half-pel motion estimation works as follows: at the best full-pel position, found before, nine half-pel SADs are calculated. These SADs are based on the MB and spatial interpolated pixels of the previous VOP. These spacial interpolated pixels are defined with interpolation/averaging the adjacent pixels. Storage of the interpolated pixels increases the memory usage.

To support objects the concept of the alpha plane is introduced, which is a bitmap indicating which pixels are inside a shape or not. A pixel which is outside a shape is called a transparant pixel. Moreover, this invokes a classification of the MBs of the VOP as follows: transparent when the MB is located outside the shape, opaque when the MB is located inside the shape and boundary MB when some pixels are inside the shape. Only pixels inside a shape may be used in motion estimation SAD-calculations.

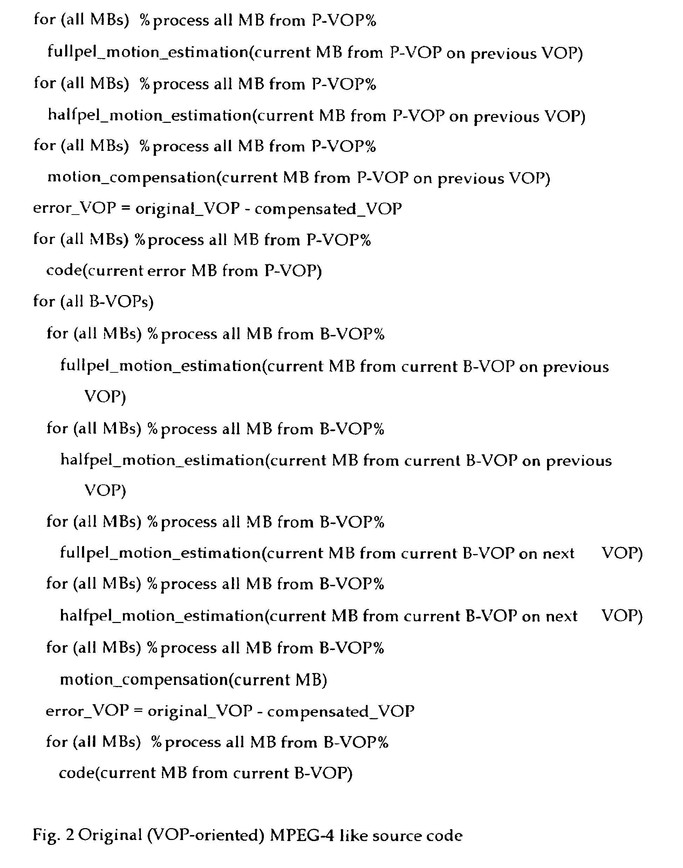

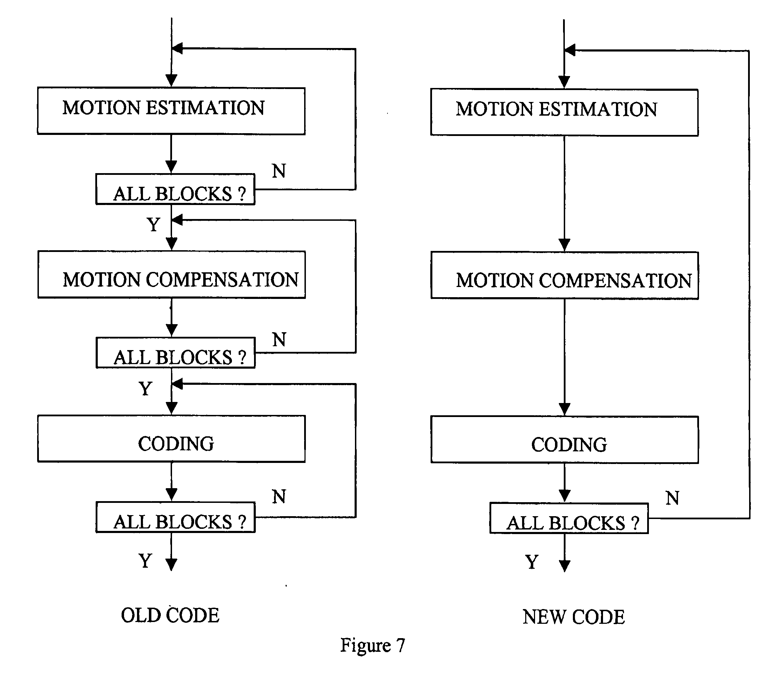

In the original source code motion estimation, motion compensation are separate and are working on entire VOPs, as illustrated in Fig. 2 and Fig. 7 left. For all MB of the VOP first motion estimation is performed, then motion compensation for all MB of that VOP and finally coding of all MB of that VOP.

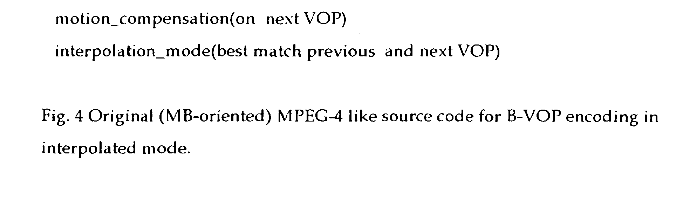

B-VOP-s are situated between P or I-VOPs and are encoded by using information of the previous and next P or I-VOP, resulting in even more efficient coding. Small difference exist in the original source between P-VOP and B-VOP motion estimation. P-VOP motion estimation is supported by both block (parts of MBs) and MB-motion estimation while B-VOP motion estimation is only MB-block oriented. P-VOP support intra-coding of MB while B-VOP always performs half-pel motion estimation. Several modes for B-VOP motion compensation exist such as: previous VOP, next VOP, interpolated or direct mode. In the interpolated mode the reconstructed VOP is the interpolation of the best match with the previous and next VOP. In the direct mode the motion vector is determined based on next P-VOP motion vector combined with half-pel motion estimation. The interpolated mode is implemented as in Fig. 4.

Notice that while using MPEG-4 encoding it is expected to receive first the previous VOP, then the next VOP and the time sequence of B-VOPs. In practice the VOPs are not recorded/displayed in this order, so reordering hardware is necessary.

MPEG-4 is used for illustration and is in no way limiting the scope of the invention. Therefore while describing the particular aspects of the invention the following more general terminology is used. Encoding of a time sequence of video frames (for instance VOPs) is considered. The video frames are divided in blocks (which are the MacroBlocks in MPEG-4). In the examples the MPEG-4 concepts Macroblock or MB and Video Object Planes or VOPs are used. The video frames, serving as reference for encoding are called reference frames throughout the text. The blocks of MPEG-4 are denoted subblocks.

### Data storage and transfer exploration methodology

Transmission of a video information stream is performed by encoding said video information stream into a different digital representation of said video information stream by an encoding digital system. Said different digital representation is efficient for transmission. Said digital system has means for sending said digital representation to a second digital system. Said second digital system has means for receiving said digital representation and able of decoding said digital representation, resulting in the original video information stream, naturally partly corrupted due to the transmission and/or coding. Note that the same principles can be used for storage.

Encoding of a video information stream by a digital system results in power consumption of said digital system. The amount of power consumed by said digital system depends on the encoding method. An encoding method comprises of a set of instructions or operations, performed on said video information stream. The power consumption of said digital system can be minimized by constructing said encoding methods in a particular way. Said construction is started with an initial encoding method, which is not so optimal with respect to power and which is then transformed into a more power optimal version by using innovative code manipulations. Construction of said method is preferably supported by a design methodology.

The underlying principles of the data storage and transfer exploration methodology are such that when the method is implemented in a digital system the redundancy in data transfers can be reduced, locality in the accesses, so that more data can be retained in registers local to the data-path, is introduced, a hierarchical memory organization, where smaller memories can be accessed the most, can be used in said digital system and the 1-port less power consuming memory alternatives instead of N-port memories are favored. Said methods can be implemented in an application-specific or a programmable processor.

The major applied code transformation steps in the methodology are: data-flow transformation (removing data-flow bottlenecks and redundant storage and access), global loop transformations (improving locality and regularity in the accesses) and exploration for data reuse.

Two main basic assumptions are taken into account explicitly in the methodology: a hierarchical and intermediate organization is needed in between the processor cores and the typically power-hungry external memories used in the system architecture and as often (in multi-media applications) the critical loop body is small, the use of a simple hardware instruction cache should be sufficient to remove the power bottleneck for instruction fetching. This can further be improved by using a distributed cache organization while avoiding unnecessary overhead.

It must be emphasized that the data storage and transfer-methodology is orthogonal to the other non-application specific technological power consumption reduction principles mentioned earlier.

### Methods for low power consuming video encoding

Throughout the further text MPEG-4 like terminology like blocks and video frames (related to the MPEG-4 concepts Macroblock (MB) and Video Object Plane (VOP) respectively) are used. Although the aspects of the invention are illustrated for encoding following the MPEG-4 standard, this does not limits the scope of the invention to this standard.

A video information stream comprises of a time sequence of video frames. A video frame can be considered as a frozen image. A video information stream is encoded by encoding said video frames. Said video frames are encoded with respect to at least one reference video frame. It is possible to encode only part of a video frame.

The presented method explicitly takes into account that said video frames of a time sequence can have different sizes and/or location with respect to a fixed reference, e.g. the display and that objects are supported.

A first aspect of the invention is a method for encoding of at least a part of a video frame with respect to a reference video frame by dividing the video frame under consideration in blocks and performing the basic encoding operations such as motion estimation, motion compensation and block coding in the order described above on a block of the considered video frame before considering another block of said video frame. Although not limited to the video frame under consideration will be part of the same sequence of video frames to which the reference video frame belongs.

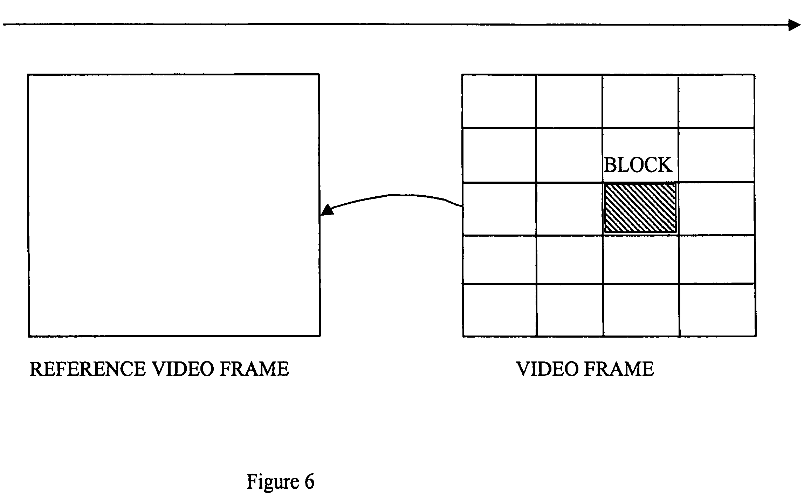

Fig 6. illustrates the principle of block division. A video frame can be represented as an array of pixels. A block can then be represented as a subarray of said pixels, with smaller sizes. Fig. 7 right shows a flowchart of the proposed method.

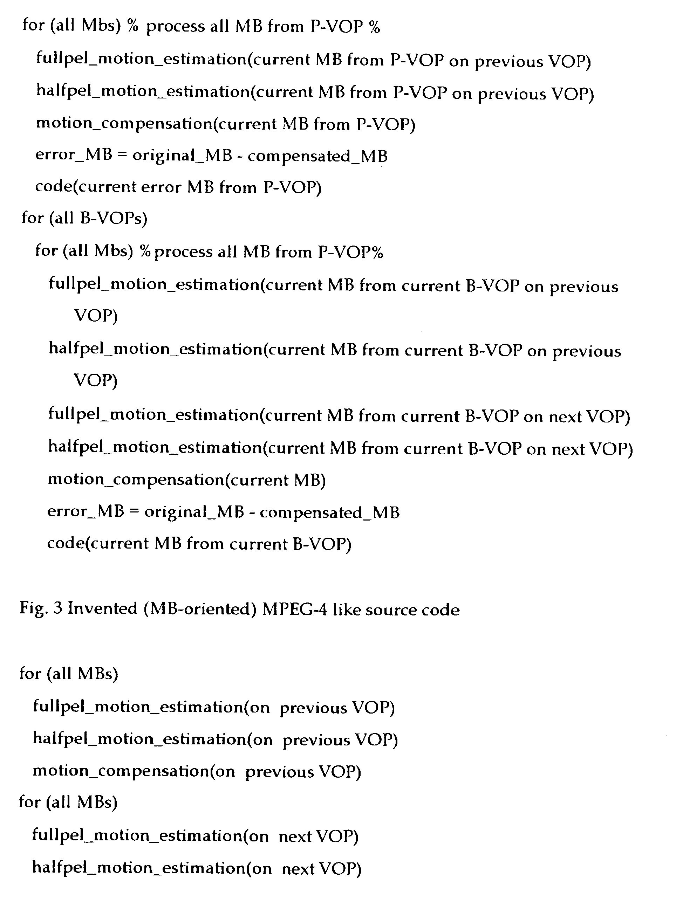

In the original MPEG-4 source code mentioned earlier the motion estimation of MBs of an entire VOP is done in 1 loop before performing MB compensation and MB coding. In the invention the original source code for encoding a time sequence of VOPs (Fig. 2 and Fig. 7 left) is transformed such that the code works on MB level instead of on VOPs (Fig. 3 and Fig. 7 right). By merging the MB loops, all the basic operation motion estimation, compensation and coding, will have the same MB loop. The transformation imposed above makes the source code MB oriented instead of VOP oriented

In general it can be stated that the original source code for encoding of a video frame in a MPEG-like sense, is transformed from a version using entire video frames as basic elements to be processed into a version using blocks as basic elements, resulting in realizations with a more optimised power consumption. Using smaller basic elements to be processed for encoding a video frame, instead of encoding the video frame at once, is done in order to obtain a more power consumption optimal architecture as smaller basic elements results in smaller memories to be accessed frequently. Block-oriented encoding is also exploited in the methods described further.

In the invention MPEG-4 like encoding of a video frame is described which is realized in a block-oriented way. Note that with coding of a block it is meant encoding of the error-block, found by substracting the original block and the block found by motion compensation. Also padding can be included in coding.

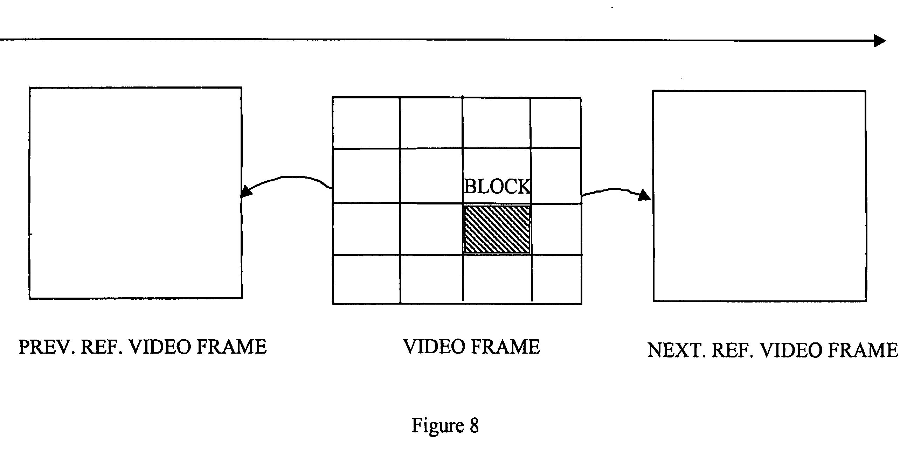

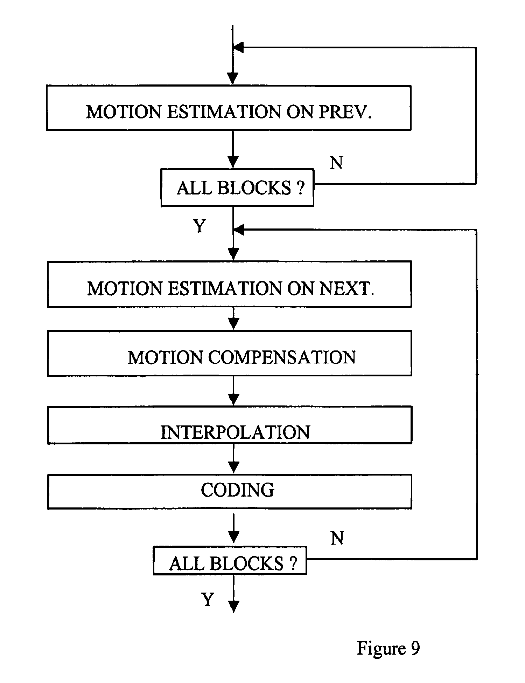

A second aspect of the invention is a method for encoding of at least a part of a video frame with respect to two reference video frames (Fig. 8). A time ordering between the video frame to be encoded and the reference video frames is introduced. This defines a previous and next video frame. The encoding method also uses a block based implementation as described above. The application of the basic encoding operations such as motion estimation, compensation and block coding are performed in a particular order as depicted in Fig. 9.

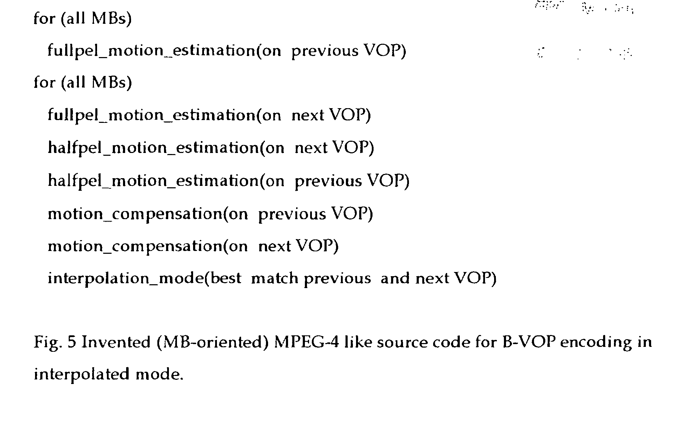

In the interpolated mode of B-VOP encoding of the original MPEG-4 source code (Fig.4), the best MB match of the previous VOP is interpolated with the best MB match of the next VOP. The motion estimation functions on the previous and next VOP are located in two separate loops. The interpolation needs the pixels of both matches and at least one of the two will be non-local due to the loop separation. In the invention the ordering of the loop is changed such that the source code of Fig. 5 (and Fig. 9) is obtained. The full-pel motion estimation to the previous VOP is fixed in the first loop, but the motion compensation and even the halfpel motion estimation function can be shifted to the second loop.

When this is done the storage in between the loops will change from storage motion compensated previous VOP to storage of the half-pel motion vectors or even to storage of the full-pel motion vectors respectively. Storage of the motion compensated VOP is clearly bad for power consumption, it will need a huge storage and many accesses to store and retrieve the motion compensated data. The very small storage gain, for storing the full-pel vector in instead of the half-pel vector, is negligible in comparison with the extra non-local previous VOP access when the half-pel motion estimation is shifted to the second loop.

In the invention an MPEG-4 like encoding of a video frame is described which is realized in a block-oriented way and with reference to two reference video frames. A time ordering between the processed video frames and the defined reference video frames is assumed. The interpolation function encodes the error-block, found by substracting the original block and the block found by interpolating the blocks found by both motion compensations. The particular ordening of the encoding operations results in an improved data locality, resulting in a more power consumption optimal architecture.

### This aspect can be formulated as follows:

A method of encoding of at least a part of a video frame with respect to two reference video frames of which one previous reference video frame is situated in the video frame time sequence before said video frame and one next reference video frame is situated in the video frame time sequence after said video frame, said part of said video frame being divided into blocks, comprising the steps of:
performing motion estimation of a block with respect to said previous reference video frame for all said blocks of said part of said video frame;
thereafter performing motion estimation of a block with respect to said next reference video frame;
thereafter performing motion compensations of said block;
thereafter interpolating the best match of said block with respect to said previous and next reference video frame;
thereafter coding of said block;
said last four steps are performed in said order for all said blocks of said part of said video frame on a block-by-block basis.

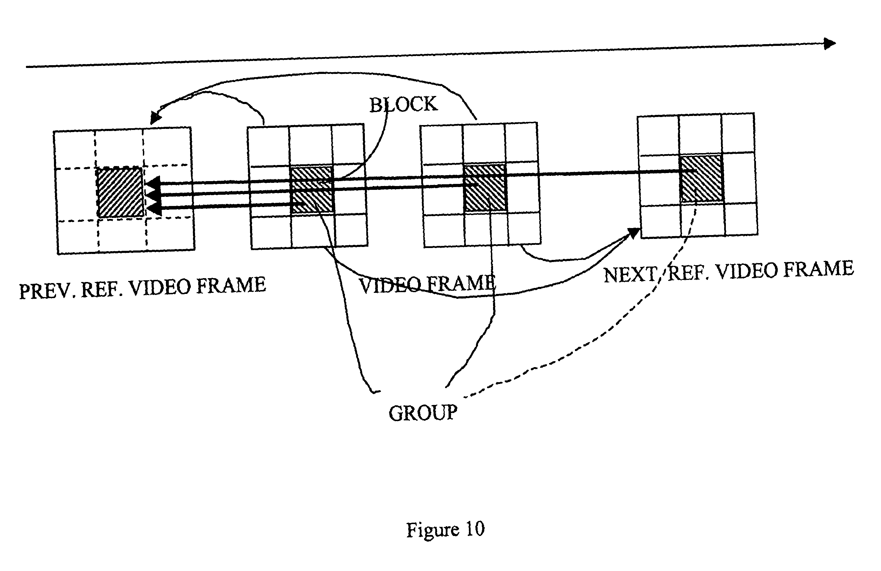

A third aspect of the invention is the introduction of methods for encoding of a time sequence of video frames with respect to two reference video frames (Fig. 10). A time ordering between the video frames to be encoded and the reference video frames are introduced. The encoding methods can also use a block based implementation as described above. The application of the basic encoding operations such as motion estimation, compensation and block coding are performed in a particular order. The video frames in between the two reference video frames are called intermediate video frames.

A MB of the VOP for which the encoding must be performed, referred to as the current VOP and the current MB, are compared with a part of a reference VOP , often the previous P-VOP. Only in B-VOP encoding the next P-VOP is also used. The reference VOP must not be scanned fully as the motion vector is assumed to have only a limited length. This defines a search-area for the MB in the reference VOP.

In principle first the encoding of the next P-VOP is performed and subsequently for each of the B-VOPs separately. Another approach is to combine the encoding of the different VOPs. New encoding methods based on combination are proposed. It must be emphasized that the encoding of the B-VOPs with respect to the next VOP is based on the reconstructed next VOP for error propagation reasons.

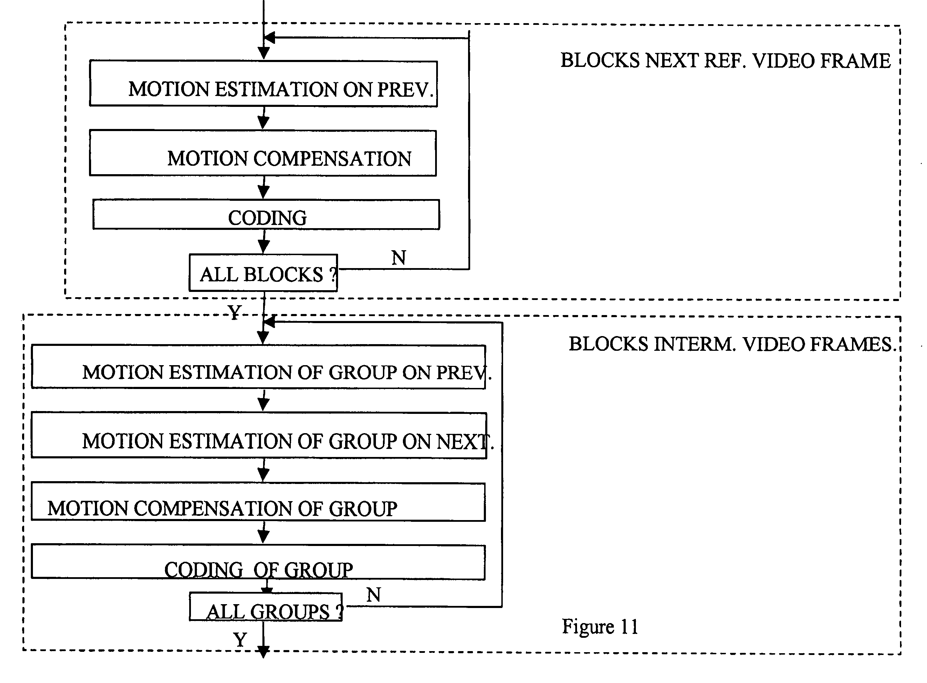

In a first method the motion estimation of all MB of the next reference VOP with respect to the previous VOP is performed first, followed by MB compensation including reconstructing and coding. Only when the full next reconstructed VOP is available, is the B-VOP intermediate video frames motion estimation, compensation and coding with respect to two reference VOPs performed, but in such a way that MBs, refering to the same MB in the reference VOPs, are grouped in one set. The encoding of the MBs is done set by set (Fig.11).

The motion estimation of the next reference VOP with respect to the previous VOP can be done block based as in the first aspect of the invention or in the conventional way (for all blocks motion estimation, then for all block motion compensation, then for all blocks coding). Also for the intermediate VOPs both the block based or the conventional frame approach can be exploited.

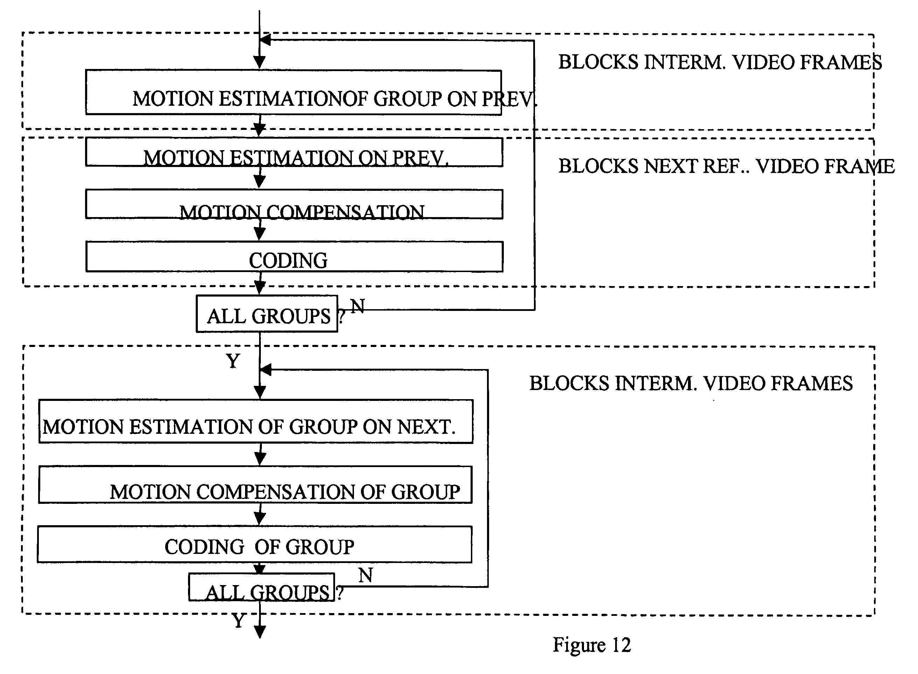

In a second method all the motion estimations with respect to the previous reference VOP, P- and B-VOP's, or more in general next reference video frame and intermediate video frames are combined. For the P-VOP also the compensation including reconstructing and coding is performed. Afterwards all the B-VOP operations such as motion estimation, compensation and coding are performed with respect to the next VOP. Again the MB, related to the same MB in the reference VOP, are grouped and set by set encoding is performed (Fig. 12).

Other groupings can be used. One alternative is to group motion estimations for B-VOPs (intermediate video frames) located before and after a previous reference video frame together with the next reference video frame. When these motion estimations are performed, the next reference video frame is motion compensated. Another alternative is to group motion estimations of intermediate video frames with respect to both the previous and next reference video frame inclusive also the motion estimation of the following next reference video frame with respect to the next reference video frame.

In the invention an MPEG-4 like type of encoding for a time sequence of video frames with respect to two reference video frames is proposed. A time ordering between the processed video frames and the defined reference video frames is assumed. The method is block-oriented. The blocks of the processed video frames are grouped into sets. The blocks of each set refer to the same block in the reference video frame, meaning that under ideal conditions for the motion estimation of such blocks the same search-area is needed. The selection of the blocks can be based on a simple selection based on their position or a more advanced grouping mechanism. The encoding of the time sequence may be based on a set-by-set processing of all the blocks.

When implementation on a digital system is considered one of said methods is often implemented. An alternative way is to implement one of said methods and to decide during run-time, based on some run-time conditions which method is executed.

In a fourth aspect of the invention so-called chasing methods are introduced. In the above proposed methods the next VOP is entirely built before executing the motion estimation on it. But as it is clear that the MB motion estimation does need only its related search-area in this next VOP, the motion estimation can already start when the first-search area becomes available. This is the so-called chasing mode of these methods.

In the invention methods are presented incorporating chasing. There is specified that the motion estimation of blocks starts as soon as the related block in the reference video frame becomes available.

A fifth aspect of the invention is the introduction of the concept of a group video frame for encoding of a time sequence of video frames. The group video frame contains the video frames for which the encoding is merged as described above. The group video frame is divided in cells. The encoding of blocks of the original video frames is merged when the blocks belong to the same cell of the group video frame. Preferably the cell size is equal to the block size.

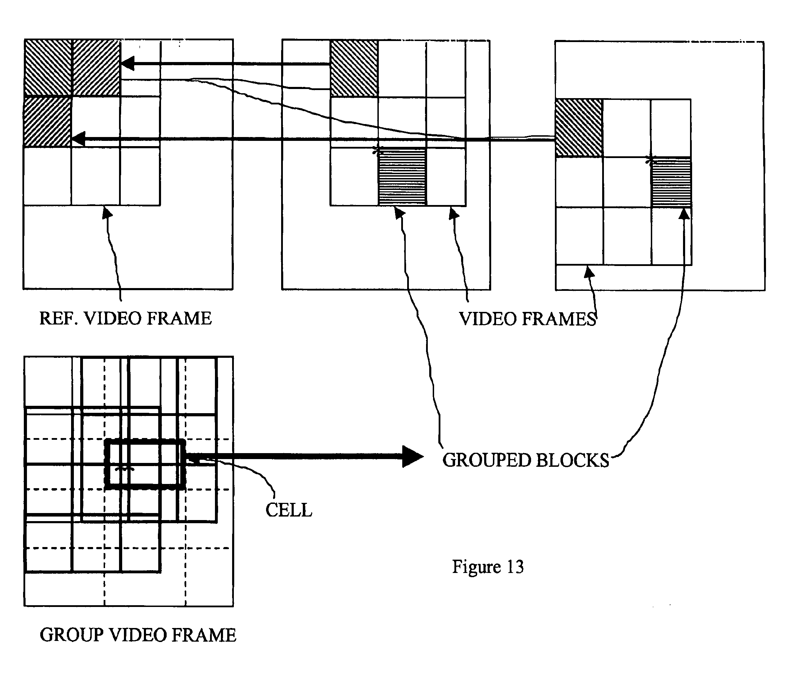

Merging of the encoding of different VOPs can pose problems when the different VOPs change size and position. The combined MB have a poor overlap, which is recognized as a misalignment or mismatch problem. This is illustrated in Fig. 13. When the blocks to be grouped would be selected just based on their relative position in their corresponding video frame (left hatched blocks) and placed back in the reference video frame, indicated by the dark arrows and the right hatched blocks, this results in no overlap of these blocks and thus a poor overlap of their search area.

By selecting close to each other MBs of the different VOPs, the search-areas overlap of these MBs will be bigger. The group-VOP is an artificial VOP which contains the area of all the VOPs in the group, considered for combined encoding. As a VOP is divided in MBs, a group-VOP is divided in cells (dashed line). Those MBs that fall in the same cell of the group-VOP are grouped and merged in one encoding step. A check whether MBs fall in the same cell is based on checking whether a certain reference position, for instance the upper-left corner is used in Fig. 13, of the MB belongs to the cell. In Fig. 13 the horizontal hatched blocks are selected. The MB loop will now go over the cells and at every iteration it will process a group of MBs from the real VOPs, resulting in a small misalignment or mismatch. The maximum misalignment between the MBs of a group with this approach is equal to the cell size. In spite of the small misalignment between the MBs, the combined search-area is bigger than one single search-area. It increases with the misalignment. The search-area size is determined by three components: the size needed for the motion vector positions, the size of the matched MB and the misalignment.

In the invention a method for the encoding of a time sequence of video frames is proposed by introducing the group video frames with its cells. It is emphasized that each block has a reference position and that blocks having their reference position in the same cell are grouped into one set. The encoding of the video frames is done by encoding all the blocks of one set before proceeding with the next set.

An sixth aspect of the invention is a method for encoding a time sequence of video frames exploiting the group video frame concept whereby the motion estimation is performed such that a pixel is reused for all motion estimations in which it is needed. In this method a check is performed to determine whether a pixel is to be included in the calculations of any of the motion estimations. When it is needed, it is read and used for all motion estimations in which it is needed.

When performing half-pel motion estimation (HPME) of MBs in MPEG-4, belonging to the same set while exploiting the group-VOP concept, it is found that these HPMEs often use the same interpolated pixels, resulting in expensive rereads. Reuse of the interpolated pixels in foreground memory for half-pel motion estimation (HPME) of MBs is introduced. Checks are performed to skip the unneeded pixels and parallel calculation of the SAD is proposed. There is indeed a considerable overlap between the half-pel motion estimation between the MBs of one group.

Their overlap is data dependent on the found full-pel motion vectors. The HPME bounding box is defined as a rectangular box drawn around the needed area for the entire HPME. The source can be transformed to a version which reuses the interpolated pixels in foreground memory. Every pixel is read once and is used for every HPME position and all MBs of the set. This will be the optimum since the interpolated pixel reads are the biggest cost here. The HPME loop traverses through the entire HPME bounding box for which the bounds can be calculated in advance. At every pixel position, a check is done if the pixel is needed for any of the half-pel motion estimation positions and the unneeded pixels are skipped. If the pixel is needed, the pixel will be read and used in all half-pel motion estimation positions and all the MBs which need the interpolated pixel.

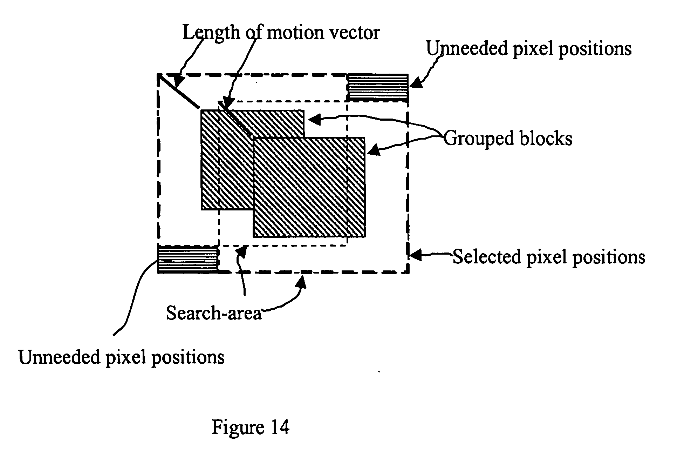

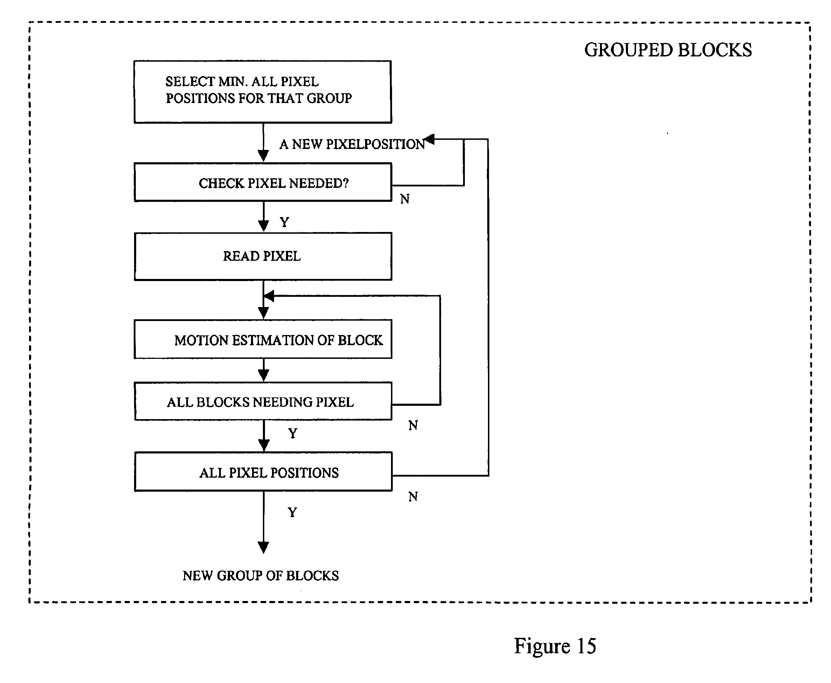

In the invention (Fig. 14) it is emphasized that in order to reduce pixel reading for encoding of MBs of the same set, first a set of pixel positions indicated by the dark dashed line, minimally containing those pixel positions needed for motion estimation of MBs of the same set is defined, thus at least comprising of the search-areas indicated by dashed lines. These are pixel positions in the reference video frame. Before reading a pixel from this reference video frame, it is checked whether this is needed and when it is needed it is used for all motion estimations that need that pixel (Fig.15). The positions indicated by the horizontal hatching show the unneeded pixels.

A seventh aspect of the invention is a method for determining a motion estimation vector for a block with respect to a reference video frame based on norm calculations, thereby excluding calculation of this norm when part of the block falls out of the reference video frame.

Note that a motion estimation vector of a block is determined by calculation of a norm between said block, located at some locations in a reference video frame, and the related pixels in said reference video frame. Said locations are determined by the maximal length of the motion vector. As such a search area is defined.

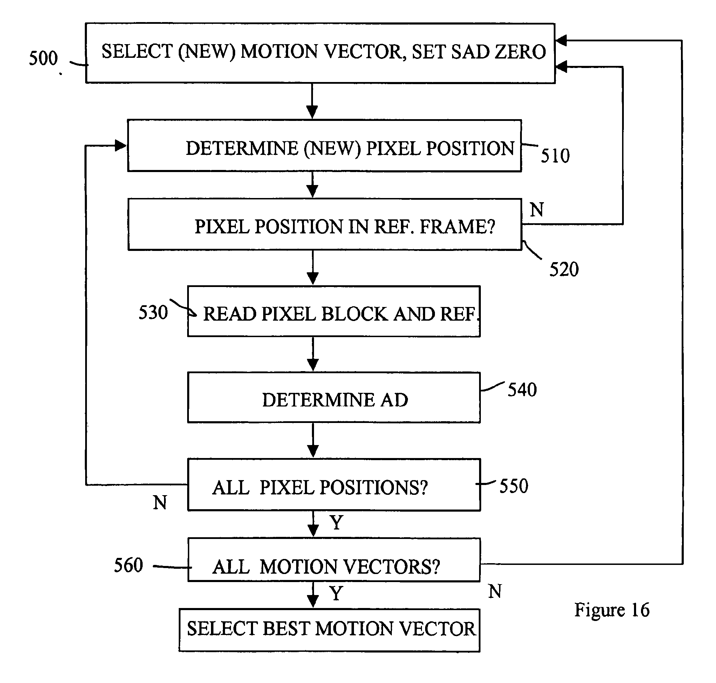

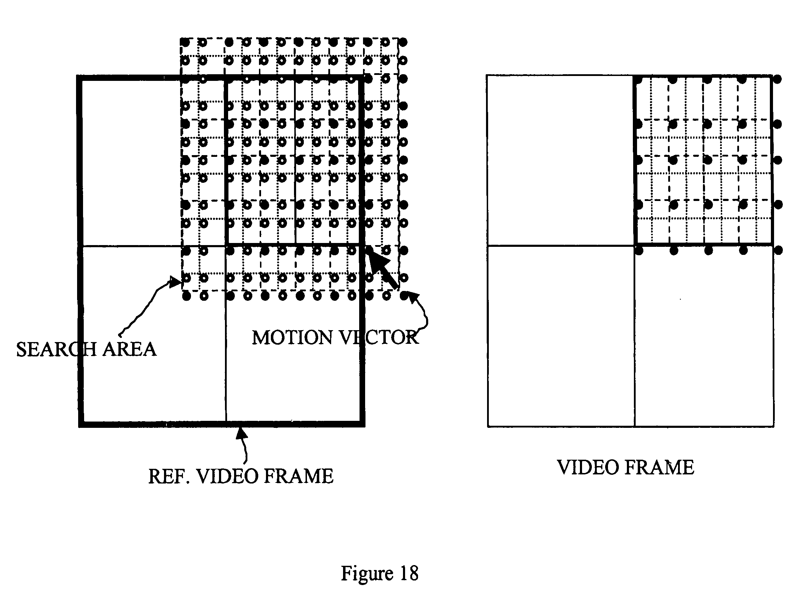

Fig. 18 shows a video frame with its block and the corresponding search-area in the reference frame which falls partly out of the reference frame. Said principle can be exploited both for half-pel and full-pel motion estimation. Fig. 16 show the flowchart of the code of the method.

When one starts with calculation of a norm for a new motion vector, the block under consideration is shifted to the relevant place, determined by the motion vector, in the reference video frame, and the norm (500) is initialized. Here the sum of absolute differences between pixel values of the block and the reference video frame is used as example. Then a pixel position is selected in (510). When this pixel position lies in the reference video frame (to be checked in 520) the pixel of the reference video frame at that position is read and the pixel of the block under consideration in 530. Then the absolute difference (540) between this interpolated pixel and the pixel of the block under consideration is determined. Then it is checked whether all pixel positions relevant for the norm for that position of the block have been used for calculation of that norm in (550). When this is not the case, a new pixel position is determined in (510). When this is the case, the same process is repeated for another motion vector. When for essentially all motion vectors a norm has been calculated (to be checked in 560), the best motion vector is selected.

In the original source code, when part of the search-area falls outside of the bounding-box of the previous VOP, then the pixel is undefined and by default a high pixel value, causing a bad SAD, is used. In the present invention reads outside the VOP-bounding box are avoided by adapting the search-area.

As an example P-VOP motion estimation, where the next VOP is constructed from the previous VOP, is considered. The search area size on the previous VOP is constrained by the maximum motion vector. Moreover, the position of the search-area projected on the previous VOP is dependent on the next VOP position, previous VOP position and the position of the current MB in the next VOP. The required position of the search-area is known in next VOP coordinates and is converted to previous VOP coordinates. Size and position changes between every two VOPs are causing problems for the existence of the entire search area. If a search-area pixel falls outside the previous VOP bounding box, then the pixel is undefined and a default high value is copied to the array. These high pixel values cause a bad SAD value at the position that uses at least one undefined pixel, outside bounding box. It is however relatively easy to adapt the search-area to the VOP size to prevent reads outside the VOP bounding box. First calculate the wanted bounds of the search-area. Next determine the granted search area which is adapted to the VOP bounding box.

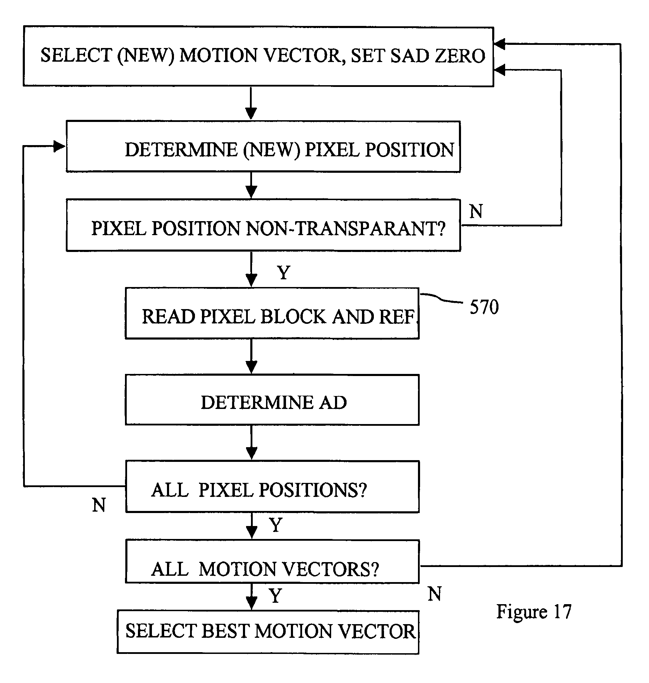

An eighth aspect of the invention is a method for determining a motion estimation vector for a block with respect to a reference video frame based on norm calculations, thereby excluding calculation of this norm when part of the related block in the reference video frame contains transparant pixels. A code of this method is illustrated in Fig. 17. When compared to Fig. 16 the test 510 of Fig 16 is replaced by a test 570, checking whether the pixel of the reference video frame is transparent or not.

When in the SAD calculation transparent MB pixels are used, a high pixel value is used (causing a bad SAD). An a priori check on the type of the pixel stored in the so-called alpha plane, avoids the unnecessary access of pixels and SAD calculations. A cheaper implementation of this principle is checking the corners of a bounding box around a shape. Based on the validity, checking whether the corners are lying in a transparent MB of the previous VOP and depending on the case additional checks on the alpha plane, it can be decided whether the SAD calculation must be performed or not.

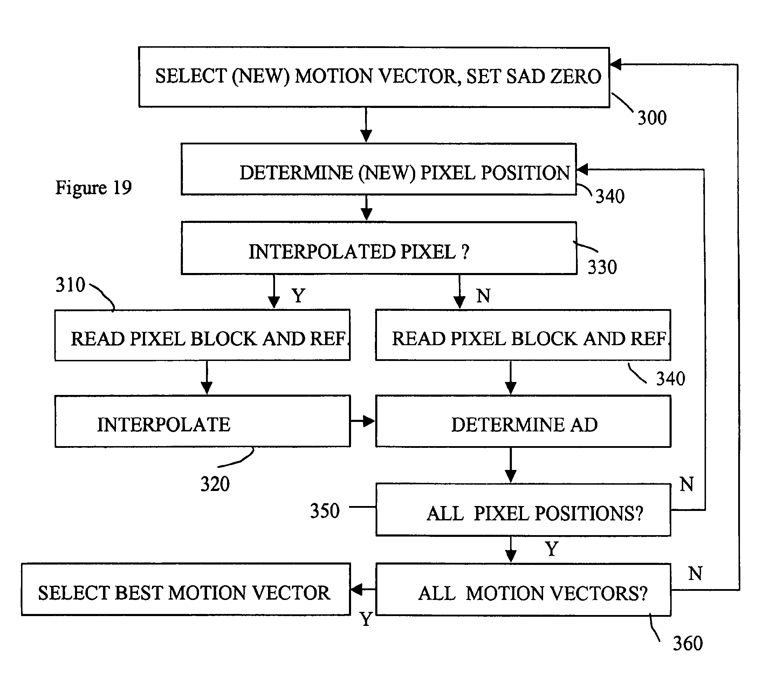

A ninth aspect of the invention is a method for determining a motion estimation vector for a block with respect to a reference video frame based on an interpolated version of that reference video frame. The interpolated versions of the reference video frame are not determined in advance but the interpolated pixels are calculated when needed and not stored. Fig. 18 shows the concept of interpolated blocks. Fig. 19 shows the flowchart of the code of the method. When one starts with calculation of a norm for a new motion vector, the block under consideration is shifted to the relevant place, determined by this motion vector, in the reference video frame, and the norm (300) is initialized. Here the sum of absolute difference between pixel values of the block and the reference video frame is used as example. Then a pixel position is selected in (340). When this pixel position in the reference video frame points to an interpolated pixel (to be checked in (330)), this interpolated pixel is calculated by reading (310) the original pixels of the reference video frame needed for determining the interpolated pixel by interpolation (320). Then the absolute difference between this interpolated pixel and the pixel of the block under consideration is determined (340). Then it is checked whether all pixel positions relevant for the norm for that position of the block have been used for calculation of that norm in (350). When this is not the case, a new pixel position is determined in (340). When this is the case, the same process is repeated for another motion vector. When for essentially all motion vectors a norm has been calculated (to be checked in 360), the best motion vector is selected.

The half-pel motion estimation in MPEG-4 uses the interpolated VOP to find a better match after the full-pel motion estimation. Because of this in the original code the entire VOP is interpolated and stored in the main memory. The total needed storage for an interpolated VOP is four times the storage of the original VOP. Since the interpolation is a simple operation, the interpolated VOP accesses and storage can be removed by recalculation i.e. recalculate an interpolated pixel when needed.

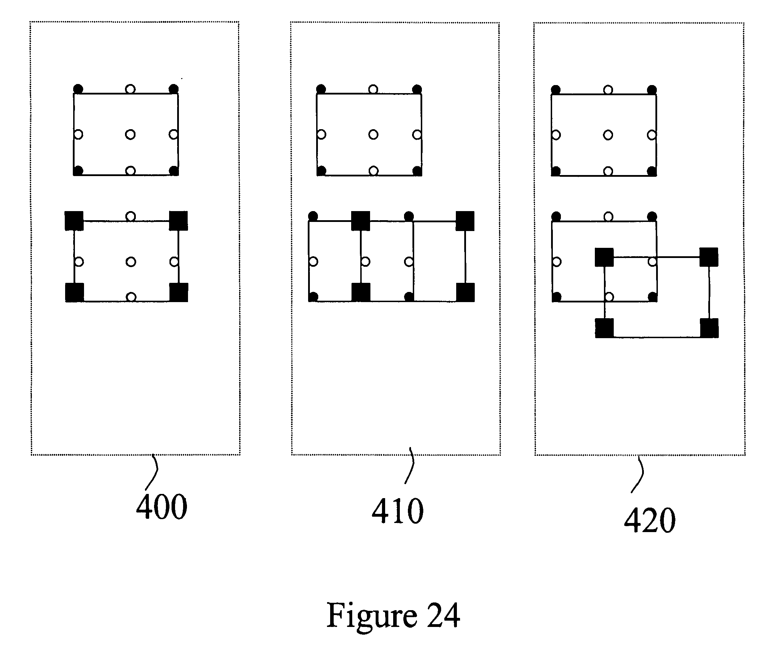

In the invention a method for motion estimation, comprises determining the motion vector of a block (300) with respect to a reference video frame (310) based on calculation of a norm between the block considered (300) and a block in the reference video frame at positions determined by the motion vector. The motion vector with the corresponding minimal norm is selected. The motion estimation works with an interpolated version of the reference video frame. This means that the norms are now determined for a reference block with more pixels than the original reference block. These extra pixels (indicated by open circles in Fig. 18) are determined by interpolation of the original pixels (indicated by full circles in Fig. 18). An aspect of the invention is that the interpolated pixels are not stored but calculated when needed. These interpolated pixels are needed when the position of the block of the video frame under consideration on the interpolated reference video frame for calculation of a particular norm is such that the block pixels coincides at least partly with interpolated pixels of the interpolated reference video frame. Figure 24 illustrates this. The blocks on top of these figures illustrate the interpolated reference video frame with original (full circles) and interpolated pixels (open circles). The video frame under consideration is illustrated with its pixels as full squares. Situation (400) lower figure shows a position of the video frame on the reference video frame where the pixels of the video frame do not coincide with interpolated pixels. Situation (410) and (420) shows positions for which such overlap of pixels of the video frame and interpolated pixels appears.

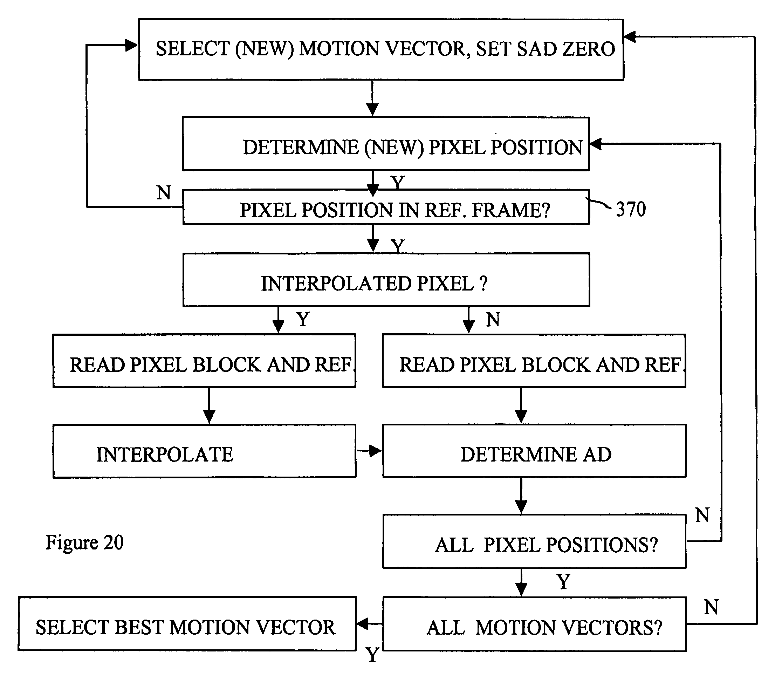

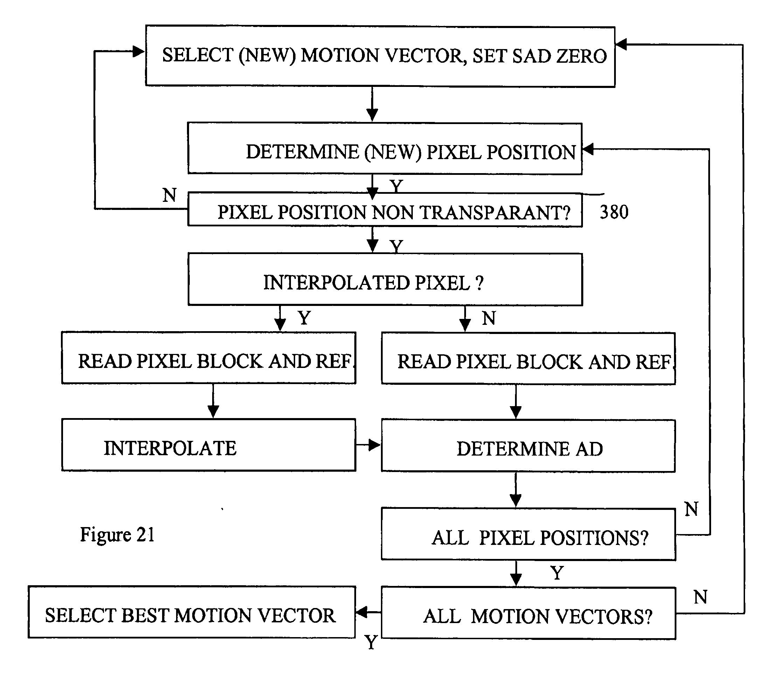

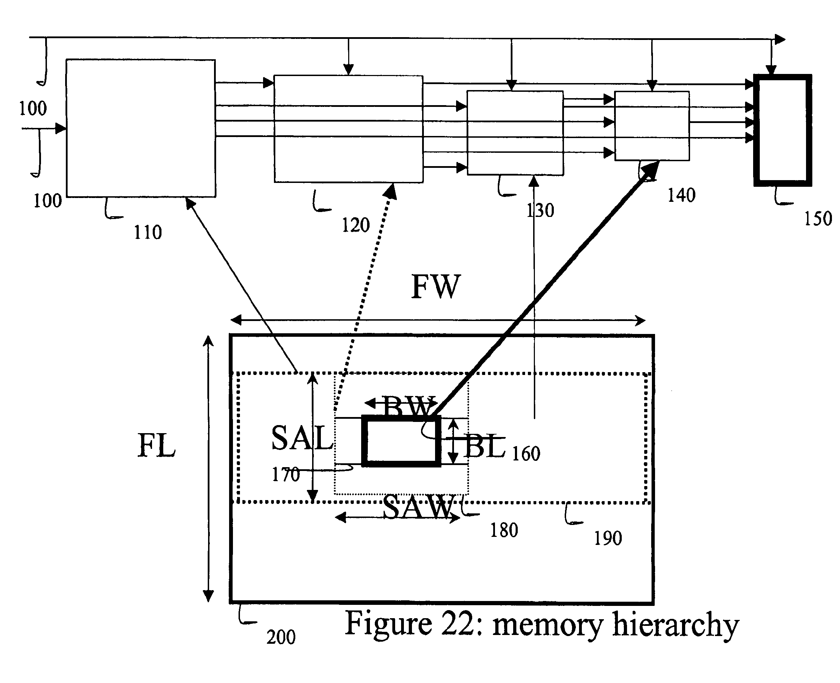

The method for determining a motion estimation vector for a block with respect to a reference video frame based on that block and an interpolated version of that reference video frame can be combined with the excluding principles stated earlier thus excluding both pixels lying out of the reference video frame and transparant pixels. In Fig. 20 and Fig. 21 the flowcharts illustrate both excluding principles separately. In Fig. 21 one can observe when comparing with Fig. 19 an additional test (370) checking whether the pixel positions fall within the reference video frame. In Fig. 22 one can observe when comparing with Fig. 19 an additional test (380) checking whether the pixel of the reference video frame on that position is transparant or not.

A tenth aspect is the exploitation of a memory hierarchy in the digital system executing the motion estimation methods. In a straightforward implementation of these methods an architecture comprising a large main memory and a processor should be used. In said main memory the pixels of the video frames are stored. In the invention the use of a memory hierarchy is introduced. Motion estimation wherein at least part of the pixels are accessed from memories (110), (120), (130), (140) which can not contain all the pixels of reference video frame, is presented. Four sizes of memories are introduced. A first memory (140) can preferably contain the pixels of a block (160) in a video frame (200). A second memory (130) can preferably contain the pixels of a block band over the search area (170) in the video frame. A third memory (120) can preferably contain the pixels of the search area (180) in the video frame. A fourth memory (110) can preferably contain the pixels of a search area band (190) over the reference video frame. For each of said memory sizes upper- and lower bounds are determined (Fig 22) as functions of the block dimensions (Block Width BW, Block Length BL), search area dimensions (Search Area Length SAL, Search Area Width SAW) and video frame dimensions (video Frame Length FL, video Frame Width FW). The dimensions are the memories are optimized in order to reduce the global amount of pixel transfers from the main memory needed for the motion estimation operation. The memories are fed from the main memory via (100). The other arrows indicate pixel transfer between the four memories and between the four memories and the processor (150). The search area can be denoted as a region within the reference video frame determined by the predetermined maximal length of the motion vector sought. The lower bound on the first memory takes into account that one can use a memory which can only contain a pixels of a block with dimensions BL*BW minus one row (210). The lower bound on the second memory takes into account that one can use a memory which can only contain pixels of a block with dimensions (BL-1)*SAW plus the pixels of a block of dimensions of one row thus BW*1 (220). The lower bound on the fourth memory takes into account that one can use a memory which can contain only pixels of a block of dimensions (SAL-BL)*FW plus the pixels of a block of dimensions BL*SAW (230).

Note that throughout the description of the invention with motion estimation of a first block of a video frame with respect to a reference video frame is meant determining for which motion vector, which depicts the place shifting of the first block with respect to its video frame in the reference video frame, a second block in the reference video frame can be found, such that said first and second block are as similar as possible. The result of the motion estimation operation is thus the determination or estimation of the motion vector. Throughout the description of the invention with motion compensation is meant, starting from the with motion estimation found motion vector, shifting the second block with this motion vector. Throughout the description of the invention with coding is meant subtracting the first block and the motion compensated second block, thus obtaining the so-called error-block, further encoding said error-block, possible also including padding.

## Claims

1. A method of encoding a time sequence of video frames, the method comprising the steps of:
a) identifying a video frame as previous reference video frame (PREV. REF. VIDEO FRAME);
b) identifying a video frame, situated in said video frame time sequence in time after said previous reference video frame (PREV. REF. VIDEO FRAME), as a next reference video frame (NEXT REF. VIDEO FRAME);
c) dividing said next reference video frame (NEXT REF. VIDEO FRAME) into blocks (BLOCK);
d) dividing intermediate video frames (VIDEO FRAME) into blocks (BLOCK), intermediate video frames (VIDEO FRAME) being situated in time in said time sequence of video frames in between said previous (PREV. REF. VIDEO FRAME) and next reference video frames (NEXT REF. VIDEO FRAME);
e) grouping a plurality of said blocks (BLOCK) of said intermediate video frames (VIDEO FRAME) in sets (GROUP), each of said sets including blocks (BLOCK) being selected from each of at least two of said intermediate video frames (VIDEO FRAME);
f) selecting a set (GROUP); 2
g) at least performing, for all blocks (BLOCK) of said intermediate video frames (VIDEO FRAME) grouped in said selected set (GROUP), at least motion estimation (MOTION ESTIMATION ON NEXT) with respect to said next reference video frame (NEXT REF. VIDEO FRAME), motion compensation (MOTION COMPENSATION) and coding (CODING); and said steps f) to g) are performed in said order on a next set.

2. A method according to claim 1, further comprising :
between steps e) and f) :
performing for all said blocks (BLOCK) of said next reference video frame (NEXT REF. VIDEO FRAME) motion estimation with respect to said previous reference video frame (PREV. REF. VIDEO FRAME), motion compensation and coding; and
step g) comprising :
for all said blocks (BLOCK), grouped in said selected set (GROUP), performing motion estimation with respect to said previous reference video frame (PREV. REF. VIDEO FRAME), said motion estimation with respect to said next reference video frame (NEXT REF. VIDEO FRAME), said motion compensation and said coding.

3. A method according to claim 1, wherein
said grouping of a plurality of blocks (BLOCK) in step e) comprises grouping blocks of said next reference video frame (NEXT REF. VIDEO FRAME) and said intermediate video frames in said sets (GROUP), and at least one block (BLOCK) being selected from said next reference video frame (NEXT REF. VIDEO FRAME); and: wherein step g) comprises
performing for all said blocks (BLOCK), grouped in said selected set (GROUP), motion estimation with respect to said previous reference video frame (PREV. REF. VIDEO FRAME), and motion compensation of said block (BLOCK) of said next reference video frame (NEXT REF. VIDEO FRAME) in said selected set (GROUP), and coding of said block (BLOCK) of said next reference video frame (NEXT REF. VIDEO FRAME) in said selected set (GROUP), thereafter performing for all said blocks (BLOCK) of said intermediate video frames (VIDEO FRAME), grouped in said selected set (GROUP), said motion estimation with respect to said next reference video frame (NEXT REF. VIDEO FRAME), said motion compensation and said coding.

4. The method of any of claims 2 or 3, whereby for grouping close to each other blocks in a group to allow data-reuse, said grouping of said blocks (BLOCK) in step e) comprises the steps of:
defining for each of said blocks (BLOCK) a reference position within said block;
grouping said video frames (VIDEO FRAME) in a group video frame;
dividing said group video frame into cells; and
grouping blocks (BLOCK) of video frames (VIDEO FRAME) in sets (GROUP) when these blocks (BLOCK) have their reference position in the same cell of said group video frame.

5. An apparatus for encoding a time sequence of video frames, the apparatus comprising:
circuitry being adapted for dividing a video frame (VIDEO FRAME) to be encoded in blocks (BLOCK), wherein one video frame is defined as a previous reference video frame (PREV. REF. VIDEO FRAME); and another video frame, situated in
said video frame time sequence in time after said previous reference video frame (PREV. REF. VIDEO FRAME), being defined as a next reference video frame (NEXT REF. VIDEO FRAME);
the apparatus furthermore comprising
circuitry being adapted for
dividing said next reference video frame (NEXT REF. VIDEO FRAME) into blocks (BLOCK);
dividing intermediate video frames (VIDEO FRAME), situated in time in said time sequence of video frames in between said previous (PREV. REF. VIDEO FRAME) and next reference video frames (NEXT REF. VIDEO FRAME), into blocks (BLOCK);
grouping a plurality of blocks (BLOCK) of said intermediate video frames (VIDEO FRAME) in sets (GROUP), each of said sets including a plurality of blocks (BLOCK) being selected from each of at least two of said intermediate video frames (VIDEO FRAME);
selecting a set (GROUP);
at least performing, for all blocks (BLOCK) of said intermediate video frames (VIDEO FRAME) grouped in said selected set (GROUP), at least motion estimation with respect to said next reference video frame (NEXT REF. VIDEO FRAME), motion compensation and coding before performing motion estimation, compensation and coding of another set (GROUP) of blocks (BLOCK) of said time sequence of video frames.

6. An apparatus according to claim 5,
said circuitry being adapted for
performing for all said blocks (BLOCK) of said next reference video frame (NEXT REF. VIDEO FRAME) motion estimation with respect to said previous reference video frame (PREV. REF. VIDEO FRAME), motion compensation and coding; and performing set (GROUP) by set (GROUP) for all said blocks (BLOCK), grouped in a selected set (GROUP), motion estimation with respect to said previous reference video frame (PREV. REF. VIDEO FRAME), said motion estimation with respect to said next reference video frame (NEXT REF. VIDEO FRAME), said motion compensation and said coding, before performing motion estimation, compensation and coding of another set (GROUP) of blocks (BLOCK) of said time sequence of video frames.

7. An apparatus according to claim 5,
circuitry being adapted for
grouping a plurality of blocks (BLOCK) of said next reference video frame (NEXT REF. VIDEO FRAME) and the plurality of blocks of said intermediate video frames (VIDEO FRAME) in sets (GROUP), said plurality of blocks (BLOCK) having at least one block (BLOCK) being selected from said next reference video frame (NEXT REF. VIDEO FRAME);
performing set (GROUP) by set (GROUP) for all said blocks (BLOCK), grouped in a selected set (GROUP), motion estimation with respect to said previous reference video frame (PREV. REF. VIDEO FRAME), and motion compensation of said block (BLOCK) of said next reference video frame (NEXT REF. VIDEO FRAME) in said selected set (GROUP), and coding of said block (BLOCK) of said next reference video frame (NEXT REF. VIDEO FRAME) in said selected set (GROUP); and
performing set (GROUP) by set (GROUP) for all said blocks (BLOCK) of said intermediate video frames (VIDEO FRAME), grouped in a selected set (GROUP), said motion estimation with respect to said next reference video frame (NEXT REF. VIDEO FRAME) said motion compensation and said coding.

## Patentansprüche

1. Ein Verfahren zum Enkodieren einer Zeitsequenz von Videobildern, wobei das Verfahren folgende Schritte umfasst:
a) Identifizierung eines Videobildes als das vorherige Referenzvideobild (VOR. REF. VIDEOBILD);
b) Identifizierung eines Videobildes, welches innerhalb der Zeitsequenz des Videobildes zeitlich nach dem vorherigen Referenzvideobild (VOR. REF. VIDEOBILD) angeordnet ist, als ein nächstes Referenzvideobild (NÄCHST. REF. VIDEOBILD);
c) Aufteilung des nächsten Referenzvideobilds (NÄCHST. REF. VIDEOBILD) in Blöcke (BLOCK);
d) Aufteilung der zwischenliegenden Videobilder (VIDEOBILD) in Blöcke (BLOCK), wobei die zwischenliegenden Videobilder (VIDEOBILD) zeitlich in der Zeitsequenz der Videobilder zwischen dem vorherigen (VOR. REF. VIDEOBILD) und dem nächsten Referenzvideobild (NÄCHST. REF. VIDEOBILD) angeordnet sind;
e) Gruppierung mehrerer Blöcke (BLOCK) der zwischenliegenden Videobilder (VIDEOBILD) in Sätze (GRUPPE), wobei jedes der Sätze Blöcke (BLOCK) umfasst, die aus jedem der mindestens zwei der zwischenliegenden Videobilder (VIDEOBILD) ausgewählt wurden;
f) Auswählen eines Satzes (Gruppe)
g) Durchführung für wenigstens alle Blöcke (BLOCK) der zwischenliegenden Videobilder (VIDEOBILD), gruppiert in diesem Satz (GROUP), wenigstens eine Bewegungsabschätzung (BEWEGUNGSABSCHÄTZUNG DER NÄCHSTEN) auf Basis des nächsten Referenzvideobildes (NÄCHST. REF. VIDEOBILD), Bewegungsabgleich (BEWEGUNGSABGLEICH) und Kodierung (KODIERUNG), wobei die Schritte f) bis g) in der Reihenfolge für den nächsten Satz wiederholt werden.

2. Verfahren gemäß Anspruch 1, umfassend weiterhin:
zwischen den Schritten e) und f):
Durchführung einer Bewegungsabschätzung basierend auf dem nächsten Referenzvideobild (NÄCHST. REF. VIDEOBILD), Bewegungsabgleich und
Kodierung, für alle Blöcke (BLOCK) des nächsten Referenzvideobildes (NÄCHST. REF. VIDEOBILD); und wobei
Schritt g) umfasst:
für alle in dem ausgewählten Satz (GROUP) gruppierten Blöcke (BLOCK), Durchführung einer Bewegungsabschätzung auf Basis des vorherigen Referenzvideobildes (VOR. REF. VIDEOBILD), Bewegungsabschätzung auf Basis des nächsten Referenzvideobildes (NÄCHST. REF. VIDEOBILD), des Bewegungsabgleichs und der Kodierung.

3. Verfahren gemäß Anspruch 1, wobei
die Gruppierung mehrerer Blöcke (BLOCK) in Schritt e) umfasst: Gruppierung der Blöcke des nächsten Referenzvideobildes (NÄCHST. REF. VIDEOBILD) und der zwischenliegenden Videobilder in die Sätze (GRUPPE), und wobei mindestens ein Block (BLOCK) aus dem nächsten Referenzvideobild (NÄCHST. REF. VIDEOBILD) ausgewählt ist;
und wobei Schritt g) umfasst:
Durchführung für alle Blöcke (BLOCK), gruppiert in dem ausgewählten Satz (GROUP), Bewegungsabschätzung auf Basis des vorherigen Referenzvideobildes (VOR. REF. VIDEOBILD), und eine Bewegungsabgleich des Blocks (BLOCK) des nächsten Referenzvideobildes (NÄCHST. REF. VIDEOBILD) in dem ausgewählten Satz (GRUPPE), und Kodierung des Blocks (BLOCK) des nächsten Referenzvideobildes (NÄCHST. REF. VIDEOBILD) in diesem ausgewählten Satz (GRUPPE), danach Durchführung für alle Blöcke (BLOCK) der zwischenliegenden Videobilder (VIDEOBILD) gruppiert in dem ausgewähltem Satz (Gruppe), eine Bewegungsabschätzung basierend auf dem nächsten Referenzvideobild (NÄCHST. REF. VIDEOBILD), dem Bewegungsabgleich und der Kodierung.

4. Verfahren nach einem der Ansprüche 2 oder 3, wobei Blöcke (BLOCK), die nah bei einander liegen, gruppiert werden, um Daten wiederzuverwenden, wobei die Gruppierung der Blöcke (BLOCK) in Schritt e) folgende Schritte umfasst:
Definierung einer Referenzposition für jeden der Blöcke (BLOCK) innerhalb des Blocks;
Gruppierung der Videobilder (VIDEOBILD) in einem GruppenVideobild;
Aufteilung des Gruppenvideobildes in Zellen; und
Gruppierung der Blöcke (BLOCK) der Videobilder (VIDEOBILD) in Sätze (GRUPPE), wenn diese Blöcke (BLOCK) ihre Referenzposition in derselben Zelle des Gruppenvideobilds aufweisen.

5. Vorrichtung zum Enkodieren einer Zeitsequenz von Videobildern, wobei die Vorrichtung umfasst:
eine Schaltung geeignet zur Aufteilung eines Videobildes (VIDEOBILD) zur Enkodierung von Blöcken (BLOCK), wobei ein Videobild definiert ist, als ein vorheriges Referenzvideobild (VOR. REF. VIDEOBILD); und ein anderes Videobild, welches in der Zeitsequenz des Videobildes zeitlich nach dem vorherigen Referenzvideobild (VOR. REF. VIDEOBILD) gelegen ist und als ein nächstes Referenzvideobild (NÄCHST. REF. VIDEOBILD) definiert ist;
die Vorrichtung umfasst weiterhin eine Schaltung geeignet zur Aufteilung des nächsten Referenzvideobildes (NÄCHST. REF. VIDEOBILD) in Blöcke (BLOCK); Aufteilung der zwischenliegenden Videobilder (VIDEOBILD), die zeitlich in der Zeitsequenz der Videobilder zwischen der vorherigen Referenzvideobilder (VOR. REF. VIDEOBILD) und der nächsten Referenzvideobilder (NÄCHST. REF. VIDEOBILD) gelegen sind, in Blöcke (BLOCK);
Gruppierung einer Vielzahl der Blöcke (BLOCK) der zwischenliegenden Videobilder (VIDEOBILD) in Sätze (GRUPPE), wobei jedes der Sätze eine Vielzahl an Blöcken (BLOCK) umfasst, welche aus jedem der mindestens zwei der zwischenliegenden Videobilder (VIDEOBILD) ausgewählt sind;
Auswählen eines Satzes (GRUPPE);
Durchführung, für wenigstens alle Blöcke (BLOCK) der zwischenliegenden Videobilder (VIDEOBILD), gruppiert in dem ausgewählten Satz (GRUPPE), wenigstens eine Bewegungsabschätzung basierend auf dem nächsten Referenzvideobild (NÄCHST. REF. VIDEOBILD), Bewegungsabgleich und Kodierung vor der Durchführung der Bewegungsabschätzung, Abgleich und Kodierung eines anderen Satzes (GRUPPE) der Blöcke (BLOCK) der Zeitsequenz der Videobilder.

6. Vorrichtung nach Anspruch 5, wobei die Schaltung, für alle Blöcke (BLOCK) des nächsten Referenzvideobildes (NÄCHST. REF. VIDEOBILD) zur Durchführung einer Bewegungsabschätzung, basierend auf dem vorherigen Referenzvideobild (VOR. REF. VIDEOBILD), Bewegungsabgleich und Kodierung; und Durchführung, Satz (GRUPPE) für Satz (GRUPPE) für alle Blöcke (GRUPPE), gruppiert in einen ausgewählten Satz (GRUPPE), Bewegungsabschätzung basierend auf dem vorherigen Referenzvideobild (VOR. REF. VIDEOBILD), Bewegungsabschätzung basierend auf dem nächsten Referenzvideobild (NÄCHST. REF. VIDEOBILD), Bewegungsabgleich und Kodierung, vor der Durchführung der Bewegungsabschätzung, Abgleich und Kodierung eines anderen Satzes (GRUPPE) der Blöcke (BLOCK) der Zeitsequenz der Videobilder, geeignet ist.

7. Vorrichtung nach Anspruch 5,
wobei die Schaltung geeignet ist zur
Gruppierung einer Vielzahl von Blöcken (BLOCK) des nächsten Referenzvideobildes (NÄCHST. REF. VIDEOBILDER) und einer Vielzahl der Blöcke der zwischenliegenden Videobilder (VIDEOBILD) in Sätze (GRUPPE), wobei die Vielzahl der Blöcke (BLOCK) mindestens einen Block (BLOCK) umfasst, der aus dem nächsten Referenzvideobild (NÄCHST. REF. VIDEOBILDER) ausgewählt wurde;
Durchführung, Satz (GRUPPE) für Satz (GRUPPE) für alle Blöcke (BLOCK), gruppiert in einen ausgewählten Satz (GRUPPE), Bewegungsabschätzung basierend auf dem vorherigen Referenzvideobild (VOR. REF. VIDEOBILD), und Bewegungsabgleich des Blocks (BLOCK) des nächsten Referenzvideobildes (NÄCHST. REF. VIDEOBILDER) in dem ausgewähltem Satz (GRUPPE), und Kodierung des Blocks (BLOCK) des nächsten Referenzvideobildes (NÄCHST. REF. VIDEOBILDER) in dem ausgewählten Satz (GRUPPE; und
Durchführung, Satz (GRUPPE) für Satz (GRUPPE) für alle Blöcke (BLOCK) der zwischenliegenden Referenzvideobilder (VIDEOBILD), gruppiert in einem ausgewählten Satz (GRUPPE), zur Bewegungsabschätzung basierend auf dem nächsten Referenzvideobild (NÄCHST. REF. VIDEOBILD), dem Bewegungsabgleich und der Kodierung.

## Revendications

1. Procédé de codage d'une séquence temporelle d'images vidéo, le procédé comprenant les étapes consistant à :
a) identifier une image vidéo en tant qu'image vidéo de référence précédente (IMAGE VIDEO REF. PRE.) ;
b) identifier une image vidéo, située dans ladite séquence temporelle d'images vidéo dans le temps après ladite image vidéo de référence précédente (IMAGE VIDEO REF. PRE.), en tant qu'image vidéo de référence suivante (IMAGE VIDEO REF. SUIV.) ;
c) diviser ladite image vidéo de référence suivante (IMAGE VIDEO REF. SUIV.) en blocs (BLOC) ;
d) diviser des images vidéo intermédiaires (IMAGE VIDEO) en blocs (BLOC), les images vidéo intermédiaires (IMAGE VIDEO) étant situées dans le temps dans ladite séquence temporelle d'images vidéo au milieu desdites images vidéo de référence précédentes (IMAGE VIDEO REF. PRE.) et suivantes (IMAGE VIDEO REF. SUIV.) ;
e) grouper une pluralité de dits blocs (BLOC) desdites images vidéo intermédiaires (IMAGE VIDEO) en ensembles (GROUPE), chacun desdits ensembles comprenant des blocs (BLOC) sélectionnés à partir de chacune d'au moins deux desdites images vidéo intermédiaires (IMAGE VIDEO) ;
f) sélectionner un ensemble (GROUPE) ;
g) effectuer au moins, pour tous les blocs (BLOC) desdites images vidéo intermédiaires (IMAGE VIDEO) groupés dans ledit ensemble sélectionné (GROUPE), au moins une évaluation de mouvement (EVALUATION MOUVEMENT SUR SUIVANT) en ce qui concerne ladite image vidéo de référence suivante (IMAGE VIDEO REF. SUIV.), une compensation de mouvement (COMPENSATION MOUVEMENT) et un codage (CODAGE) ; et lesdites étapes f) à g) sont effectuées dans ledit ordre sur un ensemble suivant.

2. Procédé selon la revendication 1, comprenant en outre :
entre les étapes e) et f) :
l'exécution pour tous lesdits blocs (BLOC) de ladite image vidéo de référence suivante (IMAGE VIDEO REF. SUIV.) d'une évaluation de mouvement en ce qui concerne ladite image vidéo de référence précédente (IMAGE VIDEO REF. PRE.), d'une compensation de mouvement et d'un codage ; et
l'étape g) comprenant :
pour tous lesdits blocs (BLOC), groupés dans ledit ensemble sélectionné (GROUPE), l'exécution d'une évaluation de mouvement en ce qui concerne ladite image vidéo de référence précédente (IMAGE VIDEO REF. PRE.), ladite évaluation de mouvement en ce qui concerne ladite image vidéo de référence suivante (IMAGE VIDEO REF. SUIV.), ladite compensation de mouvement et ledit codage.

3. Procédé selon la revendication 1, dans lequel :
ledit groupement d'une pluralité de blocs (BLOC) dans l'étape e) comprend le groupement de blocs de ladite image vidéo de référence suivante (IMAGE VIDEO REF. SUIV.) et desdites images vidéo intermédiaires dans lesdits ensembles (GROUPE), et au moins un bloc (BLOC) étant sélectionné à partir de ladite image vidéo de référence suivante (IMAGE VIDEO REF. SUIV.) ;
et dans lequel l'étape g) comprend :
l'exécution pour tous lesdits blocs (BLOC), groupés dans ledit ensemble sélectionné (GROUPE), d'une évaluation de mouvement en ce qui concerne ladite image vidéo de référence précédente (IMAGE VIDEO REF. PRE.), et d'une compensation de mouvement dudit bloc (BLOC) de ladite image vidéo de référence suivante (IMAGE VIDEO REF. SUIV.) dans ledit ensemble sélectionné (GROUPE), et d'un codage dudit bloc (BLOC) de ladite image vidéo de référence suivante (IMAGE VIDEO REF. SUIV.) dans ledit ensemble sélectionné (GROUPE), l'exécution après cela pour tous lesdits blocs (BLOC) desdites images vidéo intermédiaires (IMAGE VIDEO), groupés dans ledit ensemble sélectionné (GROUPE), de ladite évaluation de mouvement en ce qui concerne ladite image vidéo de référence suivante (IMAGE VIDEO REF. SUIV.), de ladite compensation de mouvement et dudit codage.

4. Procédé selon l'une quelconque des revendications 2 ou 3, de sorte que pour grouper des blocs proches les uns des autres dans un groupe pour permettre la réutilisation de données, ledit groupement desdits blocs (BLOC) dans l'étape e) comprend les étapes consistant à :
définir pour chacun desdits blocs (BLOC) une position de référence à l'intérieur dudit bloc ;
grouper lesdites images vidéo (IMAGE VIDEO) dans une image vidéo de groupe ;
diviser ladite image vidéo de groupe en cellules ; et
grouper des blocs (BLOC) d'images vidéo (IMAGE VIDEO) dans des ensembles (GROUPE) lorsque ces blocs (BLOC) ont leur position de référence dans la même cellule de ladite image vidéo de groupe.

5. Appareil pour coder une séquence temporelle d'images vidéo, l'appareil comprenant :
des circuits conçus pour diviser une image vidéo (IMAGE VIDEO) à coder dans des blocs (BLOC), dans lequel une image vidéo est définie en tant qu'image vidéo de référence précédente (IMAGE VIDEO REF. PRE.) ; et une autre image vidéo, située dans ladite séquence temporelle d'images vidéo dans le temps après ladite image vidéo de référence précédente (IMAGE VIDEO REF. PRE.), étant définie en tant qu'image vidéo de référence suivante (IMAGE VIDEO REF. SUIV.) ;
l'appareil comprenant en outre
des circuits conçus pour
diviser ladite image vidéo de référence suivante (IMAGE VIDEO REF. SUIV.) en blocs (BLOC) ;
diviser des images vidéo intermédiaires (IMAGE VIDEO), situées dans le temps dans ladite séquence temporelle d'images vidéo au milieu desdites images vidéo de référence précédentes (IMAGE VIDEO REF. PRE.) et suivantes (IMAGE VIDEO REF. SUTV.), en blocs (BLOC) ;
grouper une pluralité de blocs (BLOC) desdites images vidéo intermédiaires (IMAGE VIDEO) dans des ensembles (GROUPE), chacun desdits ensembles comprenant une pluralité de blocs (BLOC) sélectionnés à partir de chacune d'au moins deux desdites images vidéo intermédiaires (IMAGE VIDEO) ;
sélectionner un ensemble (GROUPE) ;
effectuer, pour tous les blocs (BLOC) desdites images vidéo intermédiaires (IMAGE VIDEO) groupés dans ledit ensemble sélectionné (GROUPE), au moins une évaluation de mouvement en ce qui concerne ladite image vidéo de référence suivante (IMAGE VIDEO REF. SUIV.), une compensation de mouvement et un codage avant d'exécuter l'évaluation de mouvement, la compensation et le codage d'un autre ensemble (GROUPE) de blocs (BLOC) de ladite séquence temporelle d'images vidéo.

6. Appareil selon la revendication 5,
lesdits circuits étant conçus pour
exécuter pour tous lesdits blocs (BLOC) de ladite image vidéo de référence suivante (IMAGE VIDEO REF. SUIV.) une évaluation de mouvement en ce qui concerne ladite image vidéo de référence précédente (IMAGE VIDEO REF. PRE.), une compensation de mouvement et un codage ; et
exécuter ensemble (GROUPE) par ensemble (GROUPE) pour tous lesdits blocs (BLOC), groupés dans un ensemble sélectionné (GROUPE), une évaluation de mouvement en ce qui concerne ladite image vidéo de référence précédente (IMAGE VIDEO REF. PRE.), ladite évaluation de mouvement en ce qui concerne ladite image vidéo de référence suivante (IMAGE VIDEO REF. SUIV.), ladite compensation de mouvement et ledit codage, avant d'exécuter une évaluation de mouvement, une compensation et un codage d'un autre ensemble (GROUPE) de blocs (BLOC) de ladite séquence temporelle d'images vidéo.

7. Appareil selon la revendication 5,
les circuits étant conçus pour
grouper une pluralité de blocs (BLOC) de ladite image vidéo de référence suivante (IMAGE VIDEO REF. SUIV.) et la pluralité de blocs desdites images vidéo intermédiaires (IMAGE VIDEO) dans des ensembles (GROUPE), ladite pluralité de blocs (BLOC) ayant au moins un bloc (BLOC) sélectionné à partir de ladite image vidéo de référence suivante (IMAGE VIDEO REF. SUIV.) ;
exécuter ensemble (GROUPE) par ensemble (GROUPE) pour tous lesdits blocs (BLOC), groupés dans un ensemble sélectionné (GROUPE), une évaluation de mouvement en ce qui concerne ladite image vidéo de référence précédente (IMAGE VIDEO REF. PRE.) et une compensation de mouvement dudit bloc (BLOC) de ladite image vidéo de référence suivante (IMAGE VIDEO REF. SUIV.) dans ledit ensemble sélectionné (GROUPE), et un codage dudit bloc (BLOC) de ladite image vidéo de référence suivante (IMAGE VIDEO REF. SUIV.) dans ledit ensemble sélectionné (GROUPE) ; et
exécuter ensemble (GROUPE) par ensemble (GROUPE) pour tous lesdits blocs (BLOC) desdites images vidéo intermédiaires (IMAGE VIDEO), groupés dans un ensemble sélectionné (GROUPE), ladite évaluation de mouvement en ce qui concerne ladite image vidéo de référence suivante (IMAGE VIDEO REF. SUIV.), ladite compensation de mouvement et ledit codage.
